# EUROPEAN PATENT SPECIFICATION

(11) **EP 4 106 438 B1**
(45) Date of publication and mention of the grant of the patent: **04.02.2026**
(21) Application number: 20918700.4
(22) Date of filing: 10.12.2020
(51) Int. Cl.: H04W 72/04, H04L 5/00

(54) **CONTROL INFORMATION TRANSMISSION METHOD AND DEVICE**
STEUERUNGSINFORMATIONSÜBERTRAGUNGSVERFAHREN UND -VORRICHTUNG
PROCÉDÉ ET DISPOSITIF DE TRANSMISSION D'INFORMATIONS DE COMMANDE

(30) Priority: 14.02.2020 CN 202010093759
(43) Date of publication of application: 21.12.2022
(73) Proprietor: Datang Mobile Communications Equipment Co., Ltd., Beijing 100085 (CN)
(72) Inventor: SU, Xin, Beijing 100085 (CN); GAO, Xueyuan, Beijing 100085 (CN); WANG, Mengjun, Beijing 100085 (CN); GAO, Qiubin, Beijing 100085 (CN)
(74) Representative: Körfer, Thomas
(86) International application number: PCT/CN2020/135496
(87) International publication number: WO 2021/159841

(56) References cited:
- WO-A1-2019/135650
- WO-A1-2019/216599
- WO-A1-2019/244222
- CN-A- 110 324 900
- US-A1- 2019 313 390
- US-A1- 2019 313 390
- HUAWEI ET AL: "Summary of AI: 7.2.8.2 Enhancements on Multi-TRP/Panel Transmission of Offline Discussion", vol. RAN WG1, no. Athens, Greece; 20190225 - 20190301, 27 February 2019 (2019-02-27), XP051601181, Retrieved from the Internet <URL:http://www.3gpp.org/ftp/tsg%5Fran/WG1%5FRL1/TSGR1%5F96/Docs/R1%2D1903541%2Ezip> [retrieved on 20190227]
- HUAWEI, HISILICON: "Summary of AI: 7.2.8.2 Enhancements on Multi-TRP/Panel Transmission of Offline Discussion", 3GPP DRAFT; R1-1903541 FEATURE LEAD SUMMARYFOR ENHANCEMENTS ON MULTI-TRP_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20190225 - 20190301, 27 February 2019 (2019-02-27), Mobile Competence Centre ; 650, route des Lucioles ; F-06921 Sophia-Antipolis Cedex ; France, XP051601181

## Description

### Technical Field

The present application relates to the field of communication technologies, and particularly to a control information communication method and device.

### Background

In a New Ratio (NR) system, in order to improve the cell edge coverage and provide the more balanced service quality within a service area, the multi-point cooperation is an important technical means. From the perspective of network morphology, the network deployment with a large number of distributed transmission reception points plus baseband processing will be more conducive to providing a balanced user experience rate, and significantly reduce the delay and signaling overhead caused by trans-regional handover. With the increase of frequency bands, the relatively dense deployment of transmission reception points is also required from the perspective of ensuring the network coverage. In a high frequency band, with the increase of the integration degree of the active antenna equipment, it will be more inclined to use a modular active antenna array. Each antenna array of transmission reception points can be divided into several relatively independent antenna panels, so the shape of the entire array and the number of ports can be flexibly adjusted according to the deployment scenario and service requirements. The antenna panels or transmission reception points can be connected by light for the more flexible distributed deployment.

In the millimeter wave band, as the wavelength decreases, the blocking effect caused by obstacles such as human bodies or vehicles will become more pronounced. Therefore, how to reduce the blocking effect to enhance the reliability of the control information communication is an urgent problem to be solved at present.
In patent application WO2019244222A1, it is disclosed a user terminal including: a receiver that receives configuration information pertaining to a search space configuration; and a controller that determines, on the basis of the configuration information, the transmission configuration indicator (TCI) state for each application level or a physical downlink control channel (PDCCH) candidate included in a given control resource set (CORESET).
In document "HUAWEI ET AL: "Summary of AI: 7.2.8.2 Enhancements on Multi-TRP/ Panel Transmission of Offline discussion" 3GPP DRAFT: R1-1903541 FEATURE LEAD SUMMARY FOR ENHANCEMENTS ON MULTI-TRP V2. 3RD GENERATION PARTNERSHIP PROJECT (3GPP), MOBILE COMPETENCE CENTRE; 650, ROUTE DES LUCIOLES; F-06921 SOPHIA-ANTIPOLIS CE, vol. RAN WG1, no. Athens, Greece; 20190225 - 20190301 27 February 2019 (2019-02-27) , XP051601181, PDCCH repetition is discussed.
In patent application US2019313390A1, a method for wireless communications is provided. The method, performed by a User Equipment (UE), includes receiving, on a first cell, a first search space configuration and a second search space configuration, and a portion of the second search space configuration being different from the first search space configuration; monitoring, on the first cell, a first Physical Downlink Control Channel (PDCCH) of the first cell, based on the first search space configuration; and monitoring, on the first cell, a second PDCCH of a second cell cross-carrier scheduled by the first cell, based on the second search space configuration.

### Summary

Embodiments of the present application provide a control information communication method and device, so as to enhance the reliability of the control information communication.

The invention is as defined in the appended set of claims.

In the above embodiments of the present application, the base station makes the same DCI be carried on N PDCCH candidates, where at least one of the N PDCCH candidates corresponds to at least two TCI states, and N is an integer greater than or equal to 1, so that at least one PDCCH candidate corresponds to at least two TCI states, and then the same DCI is sent through the PDCCH(s) among the N PDCCH candidates, improving the reliability of the DCI transmission.

### Brief Description of the Drawings

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.
FIG. 1 exemplarily shows a flowchart of a control information communication method implemented at the base station side according to embodiments of the present application.
FIG. 2 exemplarily shows a flowchart of a control information communication method implemented at the terminal side according to embodiments of the present application.
FIG. 3A exemplarily shows a schematic diagram of a CORESET configuration according to embodiments of the present application.
FIG. 3B exemplarily shows a schematic diagram of a configuration relationship between transmission resources for DCI cooperative transmission according to embodiments of the present application.
FIG. 4A exemplarily shows a schematic diagram of a CORESET configuration according to embodiments of the present application.
FIG. 4B exemplarily shows a schematic diagram of a configuration relationship between transmission resources for DCI cooperative transmission according to embodiments of the present application.
FIG. 4C exemplarily shows a schematic diagram of a configuration relationship between transmission resources for DCI cooperative transmission according to embodiments of the present application.
FIG. 5A exemplarily shows a schematic diagram of a CORESET configuration according to embodiments of the present application.
FIG. 5B exemplarily shows a schematic diagram of a configuration relationship between transmission resources for DCI cooperative transmission according to embodiments of the present application.
FIG. 5C exemplarily shows a schematic diagram of a configuration relationship between transmission resources for DCI cooperative transmission according to embodiments of the present application.
FIG. 6 exemplarily shows a structural schematic diagram of a base station according to embodiments of the present application.
FIG. 7 exemplarily shows a structural schematic diagram of a terminal according to embodiments of the present application.
FIG. 8 exemplarily shows a structural schematic diagram of a base station according to embodiments of the present application.
FIG. 9 exemplarily shows a structural schematic diagram of a terminal according to embodiments of the present application.

### Detailed Description

In order to illustrate the technical solutions in the embodiments of the present application more clearly, the accompanying figures which need to be used in describing the embodiments will be introduced below briefly. Obviously the accompanying figures described below are only some embodiments of the present application, and other accompanying figures can also be obtained by those ordinary skilled in the art according to these accompanying figures without creative labor.

The "plurality" in the embodiments of the present application refers to two or more.

"Terminal" in the embodiments of the present application is also called User Equipment (UE), Mobile Station (MS), Mobile Terminal (MT), etc., and is a device for providing the voice and/or data connectivity to the user, e.g., a handheld device with the wireless connection function, a vehicle-carried device, etc. At present, some examples of the terminal are: mobile phone, tablet, laptop, palmtop computer, Mobile Internet Device (MID), wearable device, Virtual Reality (VR) device, Augmented Reality (AR) equipment, wireless terminal in the industrial control, wireless terminal in the self driving, wireless terminal in the remote medical surgery, and wireless terminal in the smart grid, wireless terminal in the transportation safety, wireless terminal in the smart city, wireless terminal in the smart home, etc.

The "base station" in the embodiments of the present application may be a Radio Access Network (RAN) node or a base station. The RAN is a part in the network that connects the terminal to the wireless network. The RAN node (or device) is a node (or device) in the radio access network, and may also be called base station. At present, some examples of the RAN node are: gNB, Transmission Reception Point (TRP), evolved Node B (eNB), Radio Network Controller (RNC), Node B (NB), Base Station Controller (BSC), Base Transceiver Station (BTS), home base station (for example, home evolved NodeB or Home Node B (HNB)), Base Band Unit (BBU), or Wireless Fidelity (Wifi) Access Point (AP), etc. Furthermore, in a network structure, the RAN may include a Centralized Unit (CU) node and a Distributed Unit (DU) node.

In the NR system, the transmission of downlink control information involves concepts such as CORESET, Search Space (SS), PDCCH candidate, Control Channel Element (CCE), etc. Here, the CORESET decides the size of time-domain resource (such as the number of symbols occupied by PDCCH) and the frequency-domain location (such as frequency band occupied by PDCCH) of available PDCCH. A search space can contain one or more than two CORESETs. The search space can define the serial number of the starting symbol of the PDCCH and the monitoring period of the PDCCH. Each search space consists of a group of PDCCH candidates with same or different aggregation levels. The CCE is the basic logical resource for PDCCH transmission, where the number of CCEs occupied by one PDCCH transmission corresponds to an aggregation level, that is, the numbers of CCEs included in different aggregation levels are different.

The embodiments of the present application will be described below in detail with reference to the drawings.

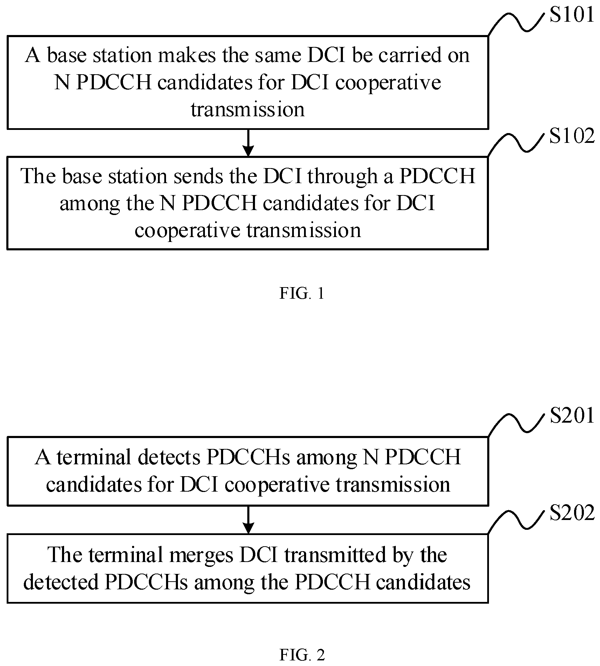

FIG. 1 exemplarily shows a flowchart of a control information communication method implemented at the base station side according to embodiments of the present application. The process includes the following steps.

S101: a base station makes the same DCI be carried on N PDCCH candidates for DCI cooperative transmission.

In this step, at least one of the N PDCCH candidates corresponds to at least two TCI states, and N is an integer greater than or equal to 1.

Optionally, in some embodiments, the DCI may be repeatedly transmitted in the N PDCCH candidates; in other some embodiments, different parts of the same DCI may be carried on different PDCCH candidates for transmission.

For example, among the N PDCCH candidates, for the PDCCH candidate corresponding to at least two TCI states, the transmission resources corresponding to different TCI states may be used to transmit the same DCI, or different parts of the same DCI. For example, a PDCCH candidate for DCI cooperative transmission corresponds to TCI state 1 and TCI state 2. In some scenarios, the DCI is repeatedly transmitted on the transmission resource corresponding to the TCI state 1 and the transmission resource corresponding to the TCI state 2. In some other scenarios, the first part of the DCI is transmitted on the transmission resource corresponding to the TCI state 1, and the second part of the DCI is transmitted on the transmission resource corresponding to the TCI state 2.

S102: the base station sends the DCI through a PDCCH among the N PDCCH candidates for DCI cooperative transmission.

In this step, when performing the cooperative transmission for the same DCI, the base station may use the PDCCH among the N PDCCH candidates for DCI cooperative transmission to perform transmission.

Optionally, the base station may pre-agree or configure (for example, through high-layer signaling) a condition for carrying the same DCI on the N PDCCH candidates for DCI cooperative transmission. If the condition is met, the cooperative transmission is performed according to the following procedure of the embodiments of the present application; otherwise, the DCI transmission is performed according to the traditional method.

Specifically, the base station may perform the cooperative transmission of the same DCI according to the preset channel condition (for example, when the channel quality is lower than a set threshold, the same DCI is carried on N PDCCH candidates for DCI cooperative transmission to perform the cooperative transmission), or may perform the cooperative transmission of the same DCI according to the feedback condition of the terminal. The above only exemplarily enumerates several possibilities for cooperative transmission of the same DCI, and the embodiments of the present application do not limit the manner or strategy for cooperative transmission of the same DCI.

FIG. 2 exemplarily shows a flowchart of a control information communication method implemented at the terminal side according to embodiments of the present application. The process includes the following steps.

S201: a terminal detects PDCCHs among N PDCCH candidates for DCI cooperative transmission.

Here, the N PDCCH candidates are used to carry the same DCI, at least one of the N PDCCH candidates corresponds to at least two TCI states, and N is an integer greater than or equal to 1.

For the manner in which the base station transmits the DCI cooperatively through N PDCCH candidates, reference may be made to the control information communication method implemented at the base station side in the embodiments of the present application, which will not be repeated here.

S202: the terminal merges DCI transmitted by the detected PDCCHs among the PDCCH candidates.

In this step, when the base station carries different parts of the same DCI in different PDCCH candidates for transmission, the terminal can merge the DCI detected from the different PDCCH candidates to obtain the complete DCI.

In embodiments of the present application, at least one of the PDCCH candidates for DCI cooperative transmission corresponds to a plurality of (two or more) TCI states, while one TCI state corresponds to one TRP or one antenna panel of the TRP, so the same DCI or different parts of the same DCI can be cooperatively sent through a plurality of corresponding TRPs, or cooperatively sent through a plurality of antenna panels of the same TRP, or cooperatively sent through at least one antenna panel on at least one first TRP and at least one second TRP (the first TRP and the second TRP are different TRPs), thereby improving the transmission reliability of the DCI.

Optionally, in some embodiments of the present application, at least one of at least two TCI states corresponding to one PDCCH candidate is associated with a CORESET. In other some embodiments, at least one of at least two TCI states corresponding to one PDCCH candidate is associated with a CORESET subset in a CORESET.

Here, one CORESET includes at least one CORESET subset, each CORESET subset is configured with a corresponding TCI state, and at least one CORESET subset corresponds to some or all of resources corresponding to the CORESET.

Optionally, in two or more CORESET subsets included in one CORESET, the time-frequency resources corresponding to at least two CORESET subsets satisfy one of the following conditions:
frequency domain resources corresponding to at least two CORESET subsets do not overlap;
time domain resources corresponding to at least two CORESET subsets do not overlap;
the frequency domain resources corresponding to at least two CORESET subsets do not overlap, and the time domain resources corresponding to at least two CORESET subsets do not overlap.

For example, a CORESET includes a CORESET subset 1 and a CORESET subset 2, the frequency domain resources of the CORESET subset 1 and CORESET subset 2 do not overlap but the time domain resources thereof overlap (for example, they are frequency-division multiplexed), or the time domain resources of the CORESET subset 1 and CORESET subset 2 do not overlap but the frequency domain resources thereof overlap (for example, they are time-division multiplexed), or the frequency domain resources and the time domain resources of the CORESET subset 1 and CORESET subset 2 do not overlap respectively.

Through this CORESET configuration mode, the frequency domain resources or time domain resources corresponding to one CORESET can be divided into smaller granularities, so that some resources in the transmission resources corresponding to one CORESET can be used for DCI cooperative transmission.

Optionally, in some embodiments, the PDCCH candidate corresponding to at least two TCI states among the PDCCH candidates for DCI cooperative transmission is formed by aggregation of at least two PDCCH candidates with lower aggregation levels. Thereby, a plurality of PDCCH candidates with lower aggregation levels can be aggregated into PDCCH candidates with higher aggregation levels, which are used for DCI cooperative transmission, so that the terminal can perform the PDCCH detection in the PDCCH candidates with higher aggregation levels, to obtain the DCI transmitted cooperatively on the corresponding PDCCHs.

Optionally, the PDCCH candidate with a higher aggregation level obtained by aggregation of at least two PDCCH candidates with lower levels may cross CORESETs or cross CORESET subsets. For example, the following cases or possible combinations thereof may be included.

Case 1: at least two PDCCH candidates with lower levels are from at least two CORESETs.

For example, a PDCCH candidate for DCI cooperative transmission has an aggregation level of 4, and this PDCCH candidate with the aggregation level of 4 is formed by aggregation of two PDCCH candidates with an aggregation level of 2, where these two PDCCH candidates with the aggregation level of 2 are from two different CORESETs.

Case 2: at least two PDCCH candidates with lower levels are from at least two CORESET subsets, where the at least two CORESET subsets belong to a same CORESET or belong to at least two CORESETs.

For example, a PDCCH candidate for DCI cooperative transmission has an aggregation level of 4, and this PDCCH candidate with the aggregation level of 4 is formed by aggregation of two PDCCH candidates with an aggregation level of 2, where one of the two PDCCH candidates with the aggregation level of 2 is from a CORESET subset 1, and the other is from a CORESET subset 2, where the CORESET subset 1 and the CORESET subset 2 belong to a same CORESET or belong to different CORESETs respectively.

Case 3: at least one of at least two PDCCH candidates with lower levels is from at least one CORESET, and at least one other PDCCH candidate is from at least one CORESET subset.

For example, a PDCCH candidate for DCI cooperative transmission has an aggregation level of 4, and this PDCCH candidate is formed by aggregation of two PDCCH candidates with an aggregation level of 2, where one of the two PDCCH candidates with the aggregation level of 2 is from a CORESET 1, and the other is from a subset of a CORESET 2.

Optionally, in some embodiments, the PDCCH candidate corresponding to at least two TCI states among the PDCCH candidates for DCI cooperative transmission is formed by aggregation of at least two PDCCH candidates with lower aggregation levels, and the search space to which the PDCCH candidate formed by aggregation of at least two PDCCH candidates with lower aggregation levels belong is formed by aggregation of at least two search spaces. Thereby, a plurality of search spaces can be aggregated into a larger search space, which is used for DCI cooperative transmission, so that the terminal performs the PDCCH detection in the larger search space to obtain the DCI transmitted cooperatively on the corresponding PDCCHs.

Optionally, the larger search space formed by aggregation of at least two search spaces may cross CORESETs or cross CORESET subsets. For example, the following cases or possible combinations thereof may be included.

Case 1: at least two of the at least two search spaces are from at least two CORESETs.

For example, a PDCCH candidate for DCI cooperative transmission has an aggregation level of 4, and this PDCCH candidate with the aggregation level of 4 is formed by aggregation of two PDCCH candidates with an aggregation level of 2, where these two PDCCH candidates with the aggregation level of 2 are from a CORESET 1 and a CORESET 2 respectively. Then the corresponding search spaces in the CORESET 1 and CORESET 2 form a larger search space for DCI cooperative transmission, and the terminal can perform the PDCCH detection in the larger search space.

Case 2: at least two search spaces are from at least two CORESET subsets that belong to a same CORESET or belong to at least two CORESETs.

For example, a PDCCH candidate for DCI cooperative transmission has an aggregation level of 4, and this PDCCH candidate with the aggregation level of 4 is formed by aggregation of two PDCCH candidates with an aggregation level of 2, where one of the two PDCCH candidates with the aggregation level of 2 is from a CORESET subset 1, and the other is from a CORESET subset 2. Then the corresponding search spaces in the CORESET subset 1 and CORESET subset 2 form a larger search space for DCI cooperative transmission, and the terminal can perform the PDCCH detection in the larger search space.

Case 3: at least one of the at least two search spaces is from at least one CORESET, and at least one other search space is from at least one CORESET subset which corresponds to part of resources corresponding to a CORESET to which it belongs.

For example, a PDCCH candidate for DCI cooperative transmission has an aggregation level of 4, and this PDCCH candidate is formed by aggregation of two PDCCH candidates with an aggregation level of 2, where one of the two PDCCH candidates with the aggregation level of 2 is from a CORESET 1, and the other is from a subset of a CORESET 2. Then the corresponding search spaces in the CORESET 1 and the subset of the CORESET 2 form a larger search space for DCI cooperative transmission, and the terminal can perform the PDCCH detection in the larger search space.

In embodiments of the present application, the transmission resources for DCI cooperative transmission can be known to the terminal in various ways, so that the terminal can use these resources to perform the PDCCH detection to obtain the DCI, where an association relationship between transmission resources for DCI cooperative transmission may be configured, so that the transmission resources with the association relationship are used for DCI cooperative transmission.

Optionally, the association relationship between at least one kind of related information includes at least one of the following.
(1) An association relationship between TCI states of CORESETs and/or CORESET subsets to which N PDCCH candidates belong.

For example, there is an association relationship between TCI states with odd numbers and CORESETs with odd CORESET numbers, or there is an association relationship between TCI states with even numbers and CORESETs with even CORESET numbers.

For example, the TCI state 1 is associated with the CORESET 1, and the TCI state 2 is associated with the CORESET 2, and then the TCI state 1 is associated with the TCI state 2 (that is, there is an association relationship between TCI state 1 and TCI state 2), indicating that the CORESET 1 associated with the TCI state 1 and the CORESET 2 associated with the TCI state 2 are transmission resources for DCI cooperative transmission. When performing the PDCCH blind detection, the terminal can perform the PDCCH blind detection based on the CORESET subset 1 associated with the TCI state 1 and the CORESET 2 associated with the TCI state 2.

For another example, there is an association relationship between TCI states with odd numbers and CORESET subsets with odd CORESET subset numbers, or there is an association relationship between TCI states with even numbers and CORESET subsets with even CORESET subset numbers.

For example, the TCI state 1 is associated with the CORESET subset 1, and the TCI state 2 is associated with the CORESET subset 2, and then the TCI state 1 is associated with the TCI state 2 (that is, there is an association relationship between TCI state 1 and TCI state 2), indicating that the CORESET subset 1 associated with the TCI state 1 and the CORESET subset 2 associated with the TCI state 2 are transmission resources for DCI cooperative transmission. When performing the PDCCH blind detection, the terminal can perform the PDCCH blind detection based on the CORESET subset 1 associated with the TCI state 1 and the CORESET subset 2 associated with the TCI state 2.

(2) An association relationship between search spaces to which N PDCCH candidates belong.

For example, Y search spaces with the smallest or largest CORESET number have an association relationship, where Y is an agreed value or a configuration value.

For example, the search space 1 and search space 2 are two search spaces including the largest CORESET number, and the search space 1 is associated with the search space 2 (that is, there is an association relationship between search space 1 and search space 2), indicating that the search space 1 and search space 2 are transmission resources for DCI cooperative transmission. When performing the PDCCH blind detection, the terminal can perform the PDCCH blind detection based on the search space 1 and search space 2.

For another example, the search space 1 and search space 2 are two search spaces including the largest CORESET subset number, and the search space 1 is associated with the search space 2 (that is, there is an association relationship between search space 1 and search space 2), indicating that the search space 1 and search space 2 are transmission resources for DCI cooperative transmission. When performing the PDCCH blind detection, the terminal can perform the PDCCH blind detection based on the search space 1 and search space 2.

(3) An association relationship between CORESETs and/or CORESET subsets to which N PDCCH candidates belong.

For example, the CORESETs with odd numbers have an association relationship, or the CORESETs with even numbers have an association relationship.

For example, the CORESET 1 is numbered 1, the CORESET 2 is numbered 2, and the CORESET 3 is numbered 3. Then the CORESET 1 and CORESET 3 have an association relationship, indicating that the CORESET 1 and CORESET 3 are transmission resources for DCI cooperative transmission. When performing the PDCCH blind detection, the terminal can perform the PDCCH blind detection based on the CORESET 1 and CORESET 3.

For another example, the CORESET subsets with odd numbers have an association relationship, or the CORESET subsets with even numbers have an association relationship.

For example, the CORESET subset 1 is numbered 1, the CORESET subset 2 is numbered 2, and the CORESET subset 3 is numbered 3. Then the CORESET subset 1 and CORESET subset 3 have an association relationship, indicating that the CORESET subset 1 and CORESET subset 3 are transmission resources for DCI cooperative transmission. When performing the PDCCH blind detection, the terminal can perform the PDCCH blind detection based on the CORESET subset 1 and CORESET subset 3.

(4) The PDCCH candidate corresponding to at least two TCI states among the N PDCCH candidates is formed by aggregation of at least two PDCCH candidates with lower aggregation levels, and the association relationship includes an association relationship between aggregation levels of the at least two PDCCH candidates with lower aggregation levels.

For example, the same aggregation levels are associated, indicating that the PDCCHs with this aggregation level are PDCCHs for DCI cooperative transmission. For another example, the PDCCHs with aggregation levels having an appointed multiplier relationship are associated, indicating that the PDCCHs with aggregation levels having the appointed multiplier relationship are PDCCHs for DCI cooperative transmission.

Optionally, the association relationship between PDCCH candidates corresponding to at least two TCI states among the N PDCCH candidates also includes an association relationship among Z PDCCH candidates with the smallest or largest number in the search space, where Z is an agreed value or a configuration value.

For example, the PDCCH candidate 1 and PDCCH candidate 2 are two PDCCH candidates with the largest number in the search space, and the PDCCH candidate 1 is associated with the PDCCH candidate 2 (that is, there is an association relationship between PDCCH candidate 1 and PDCCH candidate 2), indicating that the PDCCH candidate 1 and PDCCH candidate 2 are transmission resources for DCI repeated transmission. When performing the PDCCH blind detection, the terminal can perform the PDCCH blind detection based on the PDCCH candidate 1 and PDCCH candidate 2.

The association relationships listed above may also be used in combination, that is, the association relationship between transmission resources used for repeated DCI transmission may include a combination of the foregoing several association relationships.

Optionally, the base station may indicate transmission resources for DCI cooperative transmission through the sent DCI. Specifically, the DCI sent by the base station through at least one of the N PDCCH candidates includes cooperative transmission resource indication information for indicating an association relationship between transmission resources for DCI cooperative transmission.

The base station may add the cooperative transmission resource indication information to all DCI that are repeatedly sent, or may add the cooperative transmission resource indication information to some sent DCI, for example, add the cooperative transmission resource indication information to the first K pieces of (K is an integer greater than or equal to 1, and the value of K is less than the number of repeated transmissions of DCI) sent DCI.

Optionally, the base station may indicate the transmission resources for DCI cooperative transmission to the terminal through high-layer signaling. Specifically, the base station sends the indication information of the association relationship between transmission resources for DCI cooperative transmission to the terminal through high-layer signaling.

Optionally, the indication information may be a serial number for the association relationship between transmission resources, or may be a rule for the association relationship between transmission resources.

For example, the CORESETs with odd numbers have an association relationship, or the CORESETs with even numbers have an association relationship.

For another example, Y search spaces with the smallest or largest CORESET number have an association relationship, where Y is an agreed value or a configuration value.

The example where the association relationship between transmission resources is determined by numbers refers to the foregoing embodiments, and will not be repeated here.

Optionally, the rule for the association relationship between transmission resources may be defined according to the resource deployment and resource usage. For example, the following rule may be defined: there is an association relationship between the CORESET number to which the PDCCH belongs and the CORESET with a remainder of 0 after the modulo operation of the parameter x, where x is an integer greater than 1, and the parameter x may be pre-agreed or configured by the network side. For another example, the PDCCHs with a same aggregation level have an association relationship, or the PDCCHs with an appointed multiplier relationship have an association relationship.

Optionally, the transmission resources for DCI cooperative transmission may also be pre-agreed. Specifically, the association relationship between transmission resources for DCI cooperative transmission is pre-agreed between the base station and the terminal, or the association rule for the association relationship between transmission resources for DCI cooperative transmission is pre-agreed between the base station and the terminal.

Optionally, the serial number or association rule for the association relationship between transmission resources for DCI cooperative transmission is pre-agreed between the base station and the terminal, which is the same as the foregoing embodiment and will not be repeated here.

In some embodiments of the present application, two or more of the above-listed manners may also be used in combination to indicate the transmission resources for DCI cooperative transmission to the terminal.

For example, in an example of using the pre-agreed manner in combination with the DCI for indication, the base station and the terminal pre-agree that the PDCCHs with an aggregation level of 2 have an association relationship (that is, the PDCCHs with the aggregation level of 2 are PDCCHs for DCI repeated transmission), and the base station adds the cooperative transmission resource indication information to the repeatedly sent DCI, where the indication information indicates the TCI state of the CORESET to which other PDCCH belongs. In the case where the above-mentioned combination method is used to indicate the transmission resources for DCI cooperative transmission to the terminal, after the terminal receives the DCI including the above-mentioned cooperative transmission resource indication information, the terminal can determine the TCI state of the CORESET to which other PDCCH belongs according to the cooperative transmission resource indication information included in the DCI, and further determine the same DCI transmitted on the PDCCHs with the aggregation level of 2 in the CORESET associated with the TCI state according to the pre-agreed aggregation level.

For another example, in an example of using the high-layer signaling in combination with the DCI for the indication, the base station indicates through the high-layer signaling that the PDCCHs with the aggregation level of 2 have an association relationship (that is, the PDCCHs with the aggregation level of 2 are PDCCHs used for DCI repeated transmission), and the base station adds the cooperative transmission resource indication information to the repeatedly sent DCI, where the indication information indicates the CORESET to which other PDCCH belongs. In the case where the above-mentioned combination method is used to indicate the transmission resources for DCI cooperative transmission to the terminal, after the terminal receives the DCI including the above-mentioned cooperative transmission resource indication information, the terminal can determine the CORESET to which other PDCCH belongs according to the cooperative transmission resource indication information included in the DCI, and further determine the same DCI transmitted on the PDCCHs with the aggregation level of 2 in the CORESET according to the aggregation level configured by the high-layer signaling.

It should be noted that the above only exemplarily enumerates several examples in which the transmission resources used for repeated DCI transmission are indicated to the terminal in a combined manner, which is not limited in the embodiments of the present application.

The configuration mode and transmission process of the transmission resources for DCI cooperative transmission in the embodiments of the present application will be described below with reference to several examples in combination with corresponding drawings.

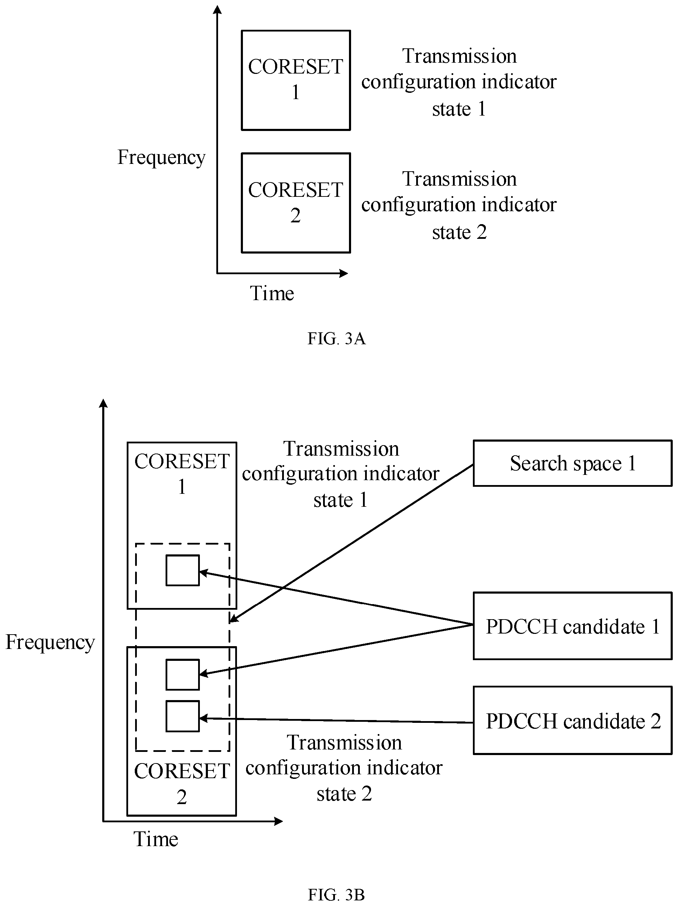

FIGs. 3A and 3B exemplarily show schematic diagrams of a configuration relationship between transmission resources for DCI cooperative transmission based on COERSET in embodiments of the present application. The CORESET decides the size (such as the number of symbols occupied by PDCCH) and the frequency-domain location (such as frequency band occupied by PDCCH) of available PDCCH time-domain resources.

The network side configures N1 (N1 is an integer greater than or equal to 1) CORESETs, and each CORESET has its own TCI state. As shown in FIG. 3A, a first CORESET configuration is exemplarily shown, where the CORESET 1 and CORESET 2 are configured at the network side, the CORESET 1 corresponds to the TCI state 1, and the CORESET 2 corresponds to the TCI state 2.

When allocating transmission resources for the DCI, the network side configures search spaces and PDCCH candidates, so that at least one PDCCH candidate in at least one search space corresponds to at least two TCI states. Specifically, the resources corresponding to the PDCCH candidates for DCI cooperative transmission are allocated to n1 (e.g., n1=2) of N1 CORESETs. The resources used in the transmission of such PDCCH candidates are distributed over a plurality of CORESETs. Correspondingly, the search space including such PDCCH candidates also spans a plurality of CORESETs.

As shown in FIG. 3B, the PDCCH candidate 1 in the CORESET 1 and the PDCCH candidate 1 and PDCCH candidate 2 in the CORESET 2 are used for DCI cooperative transmission. The search space of the PDCCH candidate 1 in the CORESET 1 and the search space of the PDCCH candidate 2 in the CORESET 2 are aggregated into a larger search space 1, and the PDCCH candidates in this search space 1 are aggregated into PDCCH candidates with a higher aggregation level.

It should be noted that, in the resource allocation example shown in FIG. 3B, the search space spans a plurality of CORESETs (TCI states). In fact, a search space does not necessarily have to span CORESETs (TCI states), that is, it can be considered that one PDCCH candidate spans two CORESETs (TCI states) and spans two search spaces (each search space has its own TCI state, depending on the CORESET it belongs to).

In order to achieve the above resource allocation as shown in FIG. 3B, one PDCCH candidate may correspond dispersedly to a plurality of TCI states in the following manner.

In each CORESET participating in cooperative transmission, firstly a search space and PDCCH candidates therein are configured independently, and then the PDCCH candidate 1 and the PDCCH candidate 2 in the search spaces belonging to the CORESET 1 and CORESET 2 respectively are associated together to form a larger PDCCH candidate. At least two search spaces involved in this process may be merged into a larger search space. For example, the PDCCH candidate 1 with an Aggregation Level (AL) of 2 in the search space belonging to the CORESET 1 and the PDCCH candidate 1 with an AL of 2 in the search space belonging to the CORESET 2 are aggregated into a PDCCH candidate with AL=4, and these two search spaces may also be aggregated into a larger search space. In this case, the terminal can detect all possible PDCCH candidates (including the aggregated PDCCH candidates) in the aggregated large search space when blindly detecting the PDCCHs.

For the CORESET configuration mode shown in FIG. 3B, the network side may associate the CORESETs for DCI cooperative transmission, and then select at least one search space from each of CORESETs with the association relationship, and associate the selected search spaces to aggregate them into a larger search space; and in the above aggregated search space, the PDCCH candidates from the search spaces in different CORESETs are aggregated into a PDCCH candidate with a higher aggregation level.

Based on the above resource configuration mode, the resource configuration indication may be performed in the following way.

The association relationship of CORESETs may be pre-agreed, for example, the CORESETs with odd or even numbers have an association relationship, or the CORESETs of which the number modulo X is equal to 0 have an association relationship (where X is an agreed value or a configuration value). The association relationship of CORESETs may also be indicated by the network to the terminal, for example, sent to the terminal through high-layer signaling.

The association relationship between Search Spaces (SSs) may be pre-agreed, for example, according to the numbers thereof or other principle. For example, Y (Y is an integer greater than or equal to 1) search spaces with the minimum number in each associated CORESET are one-to-one associated by default. For example, the CORESET 1 includes SS1 and SS2, and the CORESET 2 includes SS3, SS4 and SS5. At this time, Y=2 can be set, and then SS1 is associated with SS3 by default, and SS2 is associated with SS4 by default. The association relationship of search spaces may also be indicated by the network side to the terminal, for example, configured through high-layer signaling.

The association relationship of PDCCH candidates may be pre-agreed, for example, according to the numbers thereof or other principle. For example, Z (Z is an integer greater than or equal to 1) PDCCH candidates with the minimum number in each associated SS are one-to-one associated by default. For example, SS1 includes PDCCH candidate 1 and PDCCH candidate 2, and SS2 includes PDCCH candidate 3, PDCCH candidate 4 and PDCCH candidate 5. At this time, Z=2 can be set, and then the PDCCH candidate 1 is associated with the PDCCH candidate 3 by default, and the PDCCH candidate 2 is associated with the PDCCH candidate 4 by default. The association relationship of PDCCH candidates may also be indicated by the network to the terminal, for example, configured through high-layer signaling.

In order to reduce the complexity of the association operation of PDCCH candidates, it can be agreed that the association of PDCCH candidates is limited to PDCCH candidates with the same aggregation level. For example, the PDCCH candidate 1 in SS1 of CORESET 1 is associated with the PDCCH candidate 2 in SS2 of CORESET 2 to form a PDCCH candidate with a higher AL, where the candidate 1 and candidate 2 have the same AL. That is, in the associated SS, the PDCCH candidates are respectively associated according to AL.

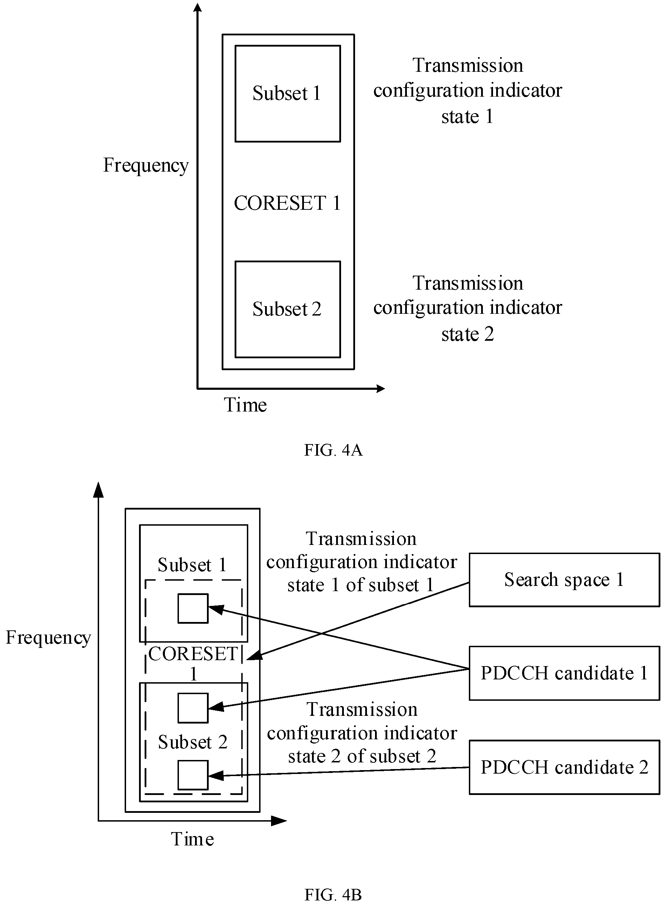

FIGs. 4A-4C exemplarily show schematic diagrams of a configuration relationship between transmission resources for DCI cooperative transmission based on COERSET subsets (hereinafter called subsets for short) in embodiments of the present application.

N2 subsets (N2 is greater than 1) are set in all CORESETs configured at the network side, and the resources corresponding to each subset are determined, where the resources may include the time-frequency resource size or further include the frequency-domain position. The numbers of subsets in different CORESETs may be the same or different. The resources corresponding to a CORESET subset may be a part of resources corresponding to the CORESET to which it belongs, and the resources corresponding to different subsets may be different. Each subset is independently configured with a TCI state. FIG. 4A exemplarily shows a second CORESET configuration. The network side configures a CORESET subset 1 and a CORESET subset 2 of a CORESET 1, the CORESET subset 1 corresponds to the TCI state 1, and the CORESET subset 2 corresponds to the TCI state 2.

When the network side allocates transmission resources for the DCI, the network side configures search spaces and PDCCH candidates, so that at least one PDCCH candidate in at least one search space corresponds to at least two TCI states. Specifically, the resources corresponding to the PDCCH candidates for DCI cooperative transmission are allocated to at least two subsets of the CORESET. The resources used in the transmission of such PDCCH candidates are distributed over a plurality of CORESET subsets. Correspondingly, the search space including such PDCCH candidates also spans a plurality of CORESET subsets.

Based on the CORESET configuration mode shown in FIG. 4A, FIG. 4B exemplarily shows a resource allocation mode of DCI cooperative transmission based on CORESET subsets.

As shown in FIG. 4B, the PDCCH candidate 1 in the subset 1 of CORESET 1 and the PDCCH candidate 1 and PDCCH candidate 2 in the subset 2 of CORESET 1 are used for DCI cooperative transmission. The search space of the PDCCH candidate 1 in the subset 1 of CORESET 1 and the search space of the PDCCH candidate 2 in the subset 2 of CORESET 1 are aggregated into a larger search space 1, and the PDCCH candidates in this search space 1 are aggregated into PDCCH candidates with a higher aggregation level.

In order to achieve the above resource allocation as shown in FIG. 4B, one PDCCH candidate may correspond to a plurality of TCI states in the following manner.

In each CORESET subset participating in cooperative transmission, firstly a search space and PDCCH candidates therein are configured independently, and then the PDCCH candidate 1 and the PDCCH candidate 2 in the search spaces belonging to the CORESET subset 1 and CORESET subset 2 respectively are associated together to form a larger PDCCH candidate. At least two search spaces involved in this process may be merged into a larger search space. For example, the PDCCH candidate 1 with an AL of 2 in the search space belonging to the CORESET subset 1 and the PDCCH candidate 1 with an AL of 2 in the search space belonging to the CORESET subset 2 are aggregated into a PDCCH candidate with AL=4, and these two search spaces may also be aggregated into a larger search space. In this case, the terminal needs to detect all possible PDCCH candidates (including the aggregated PDCCH candidates) in the aggregated large search space when blindly detecting the PDCCHs.

For the CORESET subset configuration mode shown in FIG. 4B, the network side may associate the subsets in the same CORESET for DCI cooperative transmission, and then select at least one search space from each CORESET subset with the association relationship, and associate the selected search spaces to aggregate them into a larger search space; and in the above aggregated search space, the PDCCH candidates from the search spaces in different CORESET subsets are aggregated into a PDCCH candidate with a higher aggregation level. In this case, the terminal can detect all possible PDCCH candidates (including the aggregated PDCCH candidates) in the aggregated large search space when blindly detecting the PDCCHs.

Based on the above resource configuration mode, the resource configuration indication may be performed in the following way.

The association relationship of CORESET subsets may be pre-agreed, for example, the CORESET subsets with odd or even numbers have an association relationship, or the CORESET subsets of which the number modulo X is equal to 0 have an association relationship (where X is an agreed value or a configuration value). The association relationship of CORESET subsets may also be indicated by the network side to the terminal, for example, sent to the terminal through high-layer signaling.

The association relationship between Search Spaces (SSs) may be pre-agreed, for example, according to the numbers thereof or other principle. For example, Y (Y is an integer greater than or equal to 1) search spaces with the minimum number in each associated CORESET are one-to-one associated by default. For example, the CORESET subset 1 includes SS1 and SS2, and the CORESET subset 2 includes SS3, SS4 and SS5. At this time, Y=2 can be set, and then SS1 is associated with SS3 by default, and SS2 is associated with SS4 by default. The association relationship of search spaces may also be indicated by the network side to the terminal, for example, configured through high-layer signaling.

The association relationship of PDCCH candidates may be pre-agreed, for example, according to the numbers thereof or other principle. For example, Z (Z is an integer greater than or equal to 1) PDCCH candidates with the minimum number in each associated SS are one-to-one associated by default. For example, SS1 includes PDCCH candidate 1 and PDCCH candidate 2, and SS2 includes PDCCH candidate 3, PDCCH candidate 4 and PDCCH candidate 5. At this time, Z=2 can be set, and then the PDCCH candidate 1 is associated with the PDCCH candidate 3 by default, and the PDCCH candidate 2 is associated with the PDCCH candidate 4 by default. The association relationship of PDCCH candidates may also be indicated by the network side to the terminal, for example, configured through high-layer signaling.

In order to reduce the complexity of the association operation of PDCCH candidates, it can be agreed that the association of PDCCH candidates is limited to PDCCH candidates with the same aggregation level. For example, the PDCCH candidate 1 in SS1 of the CORESET subset 1 is associated with the PDCCH candidate 2 in SS2 of the CORESET subset 2 to form a PDCCH candidate with a higher AL, where the candidate 1 and candidate 2 have the same AL. That is, in the associated SS, the PDCCH candidates are respectively associated according to AL.

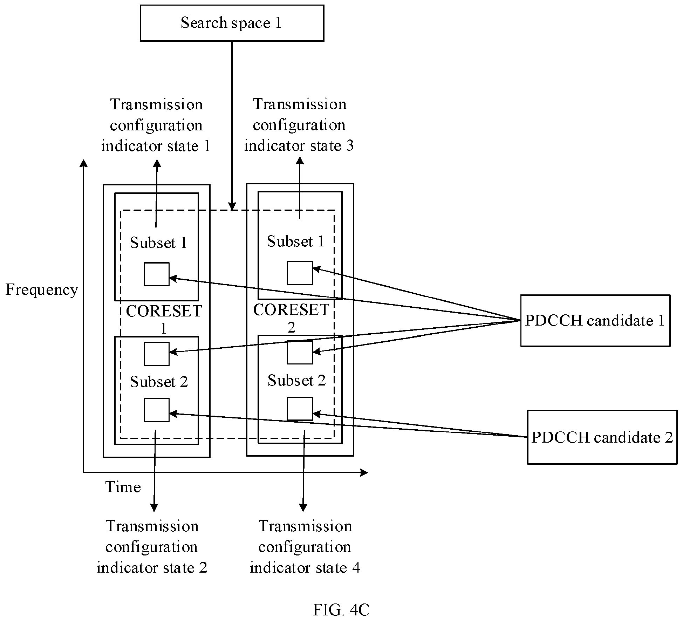

Based on the CORESET configuration mode shown in FIG. 4A, FIG. 4C exemplarily shows another resource allocation mode of DCI cooperative transmission based on CORESET subsets.

As shown in FIG. 4C, the PDCCH candidate 1 in the subset 1 of CORESET 1, the subset 2 of CORESET 1, the subset 1 of CORESET 2 and the subset 2 of CORESET 2 as well as the PDCCH candidate 2 in the subset 2 of CORESET 1 and the subset 2 of CORESET 2 are used for DCI cooperative transmission. The search space of the PDCCH candidate 1 in the subset 1 of CORESET 1 and the subset 1 of CORESET 2 and the search space of the PDCCH candidate 2 in the subset 2 of CORESET 1 and the subset 2 of CORESET 2 are aggregated into a larger search space 1, and the PDCCH candidates in this search space 1 are aggregated into PDCCH candidates with a higher aggregation level.

For the CORESET subset configuration mode shown in FIG. 4C, the network side may associate the subsets in a plurality of CORESETs for DCI cooperative transmission, and then select at least one search space from each of CORESET subsets with the association relationship, and associate the selected search spaces to aggregate them into a larger search space; and in the above aggregated search space, the PDCCH candidates from the search spaces in different CORESET subsets are aggregated into a PDCCH candidate with a higher aggregation level. In this case, the terminal can detect all possible PDCCH candidates (including the aggregated PDCCH candidates) in the aggregated large search space when blindly detecting the PDCCHs.

Based on the above resource configuration mode, the resource configuration indication may be performed in the following way.

The association relationship of CORESET subsets may be pre-agreed, for example, the CORESET subsets with odd or even numbers have an association relationship, or the CORESET subsets of which the number modulo X is equal to 0 have an association relationship (where X is an agreed value or a configuration value). The association relationship of CORESET subsets may also be indicated by the network side to the terminal, for example, sent to the terminal through high-layer signaling.

The association relationship between Search Spaces (SSs) may be pre-agreed, for example, according to the numbers thereof or other principle. For example, Y (Y is an integer greater than or equal to 1) search spaces with the minimum number in each associated CORESET are one-to-one associated by default. For example, the CORESET subset 1 includes SS1 and SS2, and the CORESET subset 2 includes SS3, SS4 and SS5. At this time, Y=2 can be set, and then SS1 is associated with SS3 by default, and SS2 is associated with SS4 by default. The association relationship of search spaces may also be indicated by the network side to the terminal, for example, configured through high-layer signaling.

The association relationship of PDCCH candidates may be pre-agreed, for example, according to the numbers thereof or other principle. For example, Z (Z is an integer greater than or equal to 1) PDCCH candidates with the minimum number in each associated SS are one-to-one associated by default. For example, SS1 includes PDCCH candidate 1 and PDCCH candidate 2, and SS2 includes PDCCH candidate 3, PDCCH candidate 4 and PDCCH candidate 5. At this time, Z=2 can be set, and then the PDCCH candidate 1 is associated with the PDCCH candidate 3 by default, and the PDCCH candidate 2 is associated with the PDCCH candidate 4 by default. The association relationship of PDCCH candidates may also be indicated by the network side to the terminal, for example, configured through high-layer signaling.

In order to reduce the complexity of the association operation of PDCCH candidates, it can be agreed that the association of PDCCH candidates is limited to PDCCH candidates with the same aggregation level. For example, the PDCCH candidate 1 in SS1 of the CORESET subset 1 is associated with the PDCCH candidate 2 in SS2 of the CORESET subset 2 to form a PDCCH candidate with a higher AL, where the candidate 1 and candidate 2 have the same AL. That is, in the associated SS, the PDCCH candidates are respectively associated according to AL.

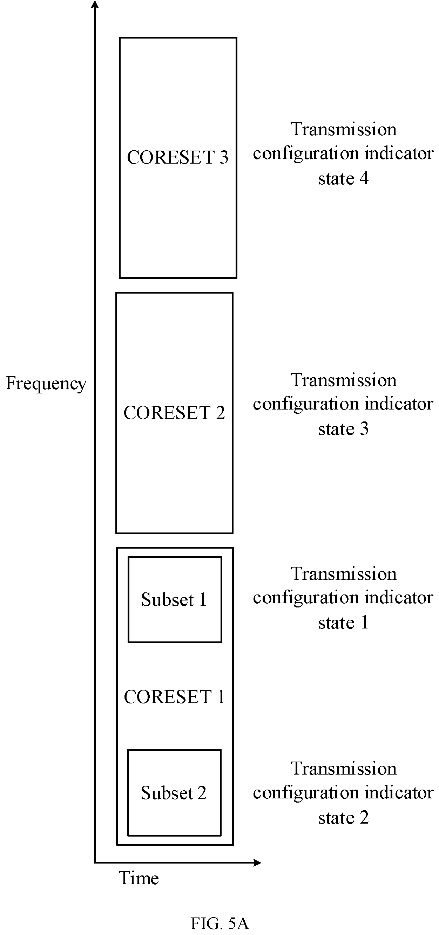

FIGs. 5A-5C exemplarily show schematic diagrams of a configuration relationship between transmission resources for DCI cooperative transmission based on COERSETs and COERSET subsets (hereinafter called subsets for short) in embodiments of the present application.

N3 subsets are set in some CORESETs configured by the network side (N3 in these CORESETs may be different, and N3 is greater than 1, that is, at least one CORESET corresponds to all the resources corresponding to the CORESET), where the time-frequency resource sizes or frequency-domain positions of the CORESETs and CORESET subsets are determined, each of the N3 subsets is independently configured with a TCI state, and each CORESET is independently configured with a TCI state. FIG. 5A exemplarily shows a third CORESET configuration. The network side configures the CORESET 1, CORESET 2 and CORESET 3, where the CORESET 1 includes a CORESET subset 1 and a CORESET subset 2, the CORESET subset 1 corresponds to the TCI state 1, the CORESET subset 2 corresponds to the TCI state 2, the CORESET 2 corresponds to the TCI state 3, and the CORESET 3 corresponds to the TCI state 4.

When the network side allocates transmission resources for the DCI, the network side configures search spaces and PDCCH candidates, and at least one PDCCH candidate in at least one search space corresponds to at least two TCI states, where at least one of the at least two TCI states corresponding to the at least one PDCCH candidate is associated with a CORESET subset, and at least one other TCI state is associated with a CORESET. Specifically, the resources corresponding to the PDCCH candidates for DCI cooperative transmission are allocated to at least one CORESET and at least one CORESET subset. Correspondingly, the search space including such PDCCH candidates also spans at least one CORESET and at least one CORESET subset.

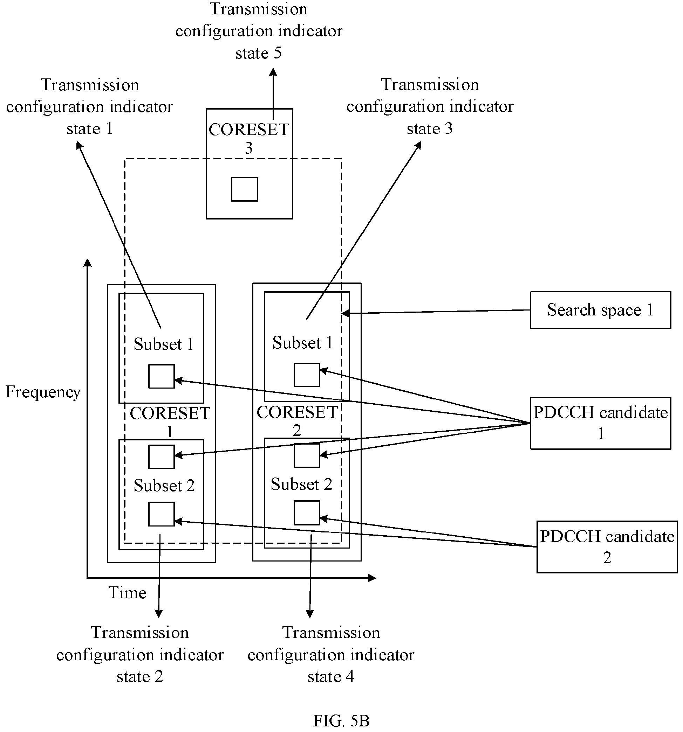

Based on the CORESET configuration mode shown in FIG. 5A, FIG. 5B exemplarily shows a resource allocation mode of DCI cooperative transmission based on CORESET subsets.

As shown in FIG. 5B, the PDCCH candidate 1 in the subset 1 of CORESET 1, the subset 2 of CORESET 1, the subset 1 of CORESET 2 and the subset 2 of CORESET 2 as well as the PDCCH candidate 2 in the subset 2 of CORESET 1 and the subset 2 of CORESET 2 are used for DCI cooperative transmission. The search space of the PDCCH candidate 1 in the subset 1 of CORESET 1 and the subset 1 of CORESET 2, the search space of the PDCCH candidate 2 in the subset 2 of CORESET 1 and the subset 2 of CORESET 2, and the search space of the CORESET 3 with no subsets divided are aggregated into a larger search space 1, and the PDCCH candidates in this search space 1 are aggregated into PDCCH candidates with a higher aggregation level.

In order to achieve the above resource allocation as shown in FIG. 5B, one PDCCH candidate may correspond to a plurality of TCI states in the following manner.

In each CORESET or CORESET subset participating in cooperative transmission, firstly a search space and PDCCH candidates therein are configured independently, and then the PDCCH candidate 1 and the PDCCH candidate 2 in the search spaces belonging to the CORESET and CORESET subset respectively are associated together to form a larger PDCCH candidate. At least two search spaces involved in this process may be merged into a larger search space. For example, the PDCCH candidate 1 with an AL of 2 in the search space belonging to the CORESET and the PDCCH candidate 1 with an AL of 2 in the search space belonging to the CORESET subset are aggregated into a PDCCH candidate with AL=4, and these two search spaces may also be aggregated into a larger search space. In this case, the terminal needs to detect all possible PDCCH candidates (including the aggregated PDCCH candidates) in the aggregated large search space when blindly detecting the PDCCHs.

For the CORESET and CORESET subset configuration mode shown in FIG. 5B, the network side may associate the CORESETs and CORESET subsets for DCI cooperative transmission, then select at least one search space from each of CORESET subsets with the association relationship, select at least one search space from each CORESET that participates in cooperation but has no subset, and associate the selected search spaces to aggregate them into a larger search space; and in the above aggregated search space, the PDCCH candidates from the search spaces in different CORESET subsets and different CORESETs are aggregated into a PDCCH candidate with a higher aggregation level. In this case, the terminal can detect all possible PDCCH candidates (including the aggregated PDCCH candidates) in the aggregated large search space when blindly detecting the PDCCHs.

Based on the above resource configuration mode, the resource configuration indication may be performed in the following way.

The association relationship of CORESET subsets may be pre-agreed, for example, the CORESET subsets with odd or even numbers have an association relationship, or the CORESET subsets of which the number modulo X is equal to 0 have an association relationship (where X is an agreed value or a configuration value). The association relationship of CORESET subsets may also be indicated by the network side to the terminal, for example, sent to the terminal through high-layer signaling.

The association relationship between Search Spaces (SSs) may be pre-agreed, for example, according to the numbers thereof or other principle. For example, Y (Y is an integer greater than or equal to 1) search spaces with the minimum number in each associated CORESET subset and each associated CORESET without subsets are one-to-one associated by default. For example, the CORESET subset 1 includes SS1 and SS2, and the CORESET includes SS3, SS4 and SS5. At this time, Y=2 can be set, and then SS1 is associated with SS3 by default, and SS2 is associated with SS4 by default. The association relationship of search spaces may also be indicated by the network side to the terminal, for example, configured through high-layer signaling.

The association relationship of PDCCH candidates may be pre-agreed, for example, according to the numbers thereof or other principle. For example, Z (Z is an integer greater than or equal to 1) PDCCH candidates with the minimum number in each associated SS are one-to-one associated by default. For example, SS1 includes PDCCH candidate 1 and PDCCH candidate 2, and SS2 includes PDCCH candidate 3, PDCCH candidate 4 and PDCCH candidate 5. At this time, Z=2 can be set, and then the PDCCH candidate 1 is associated with the PDCCH candidate 3 by default, and the PDCCH candidate 2 is associated with the PDCCH candidate 4 by default. The association relationship of PDCCH candidates may also be indicated by the network side to the terminal, for example, configured through high-layer signaling.

In order to reduce the complexity of the association operation of PDCCH candidates, it can be agreed that the association of PDCCH candidates is limited to PDCCH candidates with the same aggregation level. For example, the PDCCH candidate 1 in SS1 of the CORESET subset 1 is associated with the PDCCH candidate 2 in SS2 of the CORESET subset 2 to form a PDCCH candidate with a higher AL, where the candidate 1 and candidate 2 have the same AL. That is, in the associated SS, the PDCCH candidates are respectively associated according to AL.

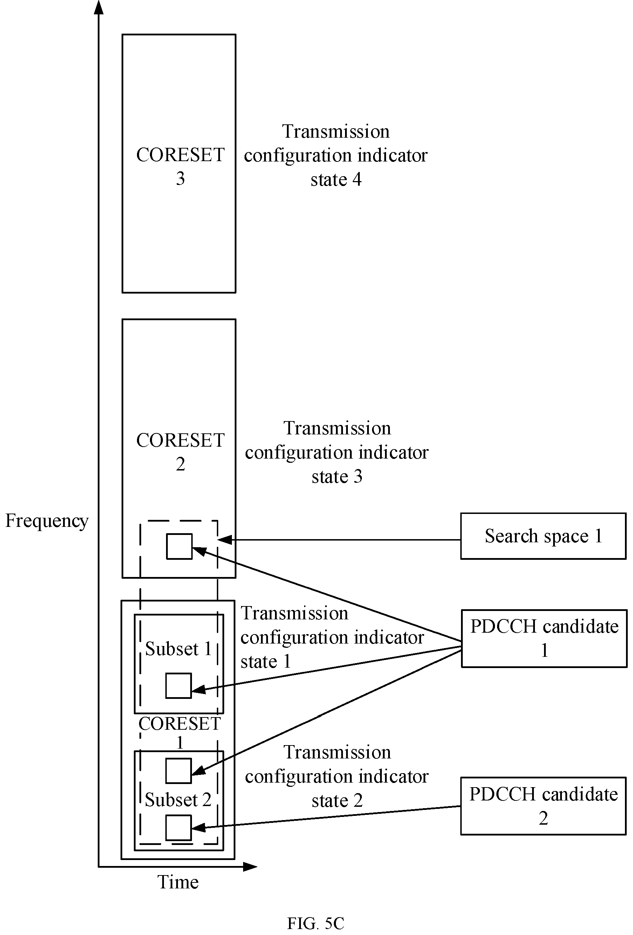

Based on the CORESET configuration mode shown in FIG. 5A, FIG. 5C exemplarily shows another resource allocation mode of DCI cooperative transmission based on CORESET subsets.

As shown in FIG. 5C, the PDCCH candidate 1 in CORESET 2, the PDCCH candidate 1 in the subset 1 of CORESET 1, and the PDCCH candidate 2 in the subset 2 of CORESET 1 are used for DCI cooperative transmission. The search space of the PDCCH candidate 1 in the CORESET 2 and the search space of the PDCCH candidate 2 in the subset 2 of CORESET 1 are aggregated into a larger search space 1, and the PDCCH candidates in this search space 1 are aggregated into PDCCH candidates with a higher aggregation level.

In order to achieve the above resource allocation as shown in FIG. 5C, one PDCCH candidate may correspond dispersedly to a plurality of TCI states in the following manner.

In each CORESET or CORESET subset participating in cooperative transmission, firstly a search space and PDCCH candidates therein are configured independently, and then the PDCCH candidate 1 and the PDCCH candidate 2 in the search spaces belonging to the CORESET and CORESET subset respectively are associated together to form a larger PDCCH candidate. At least two search spaces involved in this process may be merged into a larger search space. For example, the PDCCH candidate 1 with an AL of 2 in the search space belonging to the CORESET and the PDCCH candidate 1 with an AL of 2 in the search space belonging to the CORESET subset are aggregated into a PDCCH candidate with AL=4, and these two search spaces may also be aggregated into a larger search space. In this case, the terminal needs to detect all possible PDCCH candidates (including the aggregated PDCCH candidates) in the aggregated large search space when blindly detecting the PDCCHs.

For the CORESET and CORESET subset configuration mode shown in FIG. 5C, the network side may associate the CORESETs and CORESET subsets for DCI cooperative transmission, then select at least one search space from each of CORESET subsets with the association relationship, select at least one search space from each of CORESETs that participate in cooperation but have no subset, and associate the selected search spaces to aggregate them into a larger search space; and in the above aggregated search space, the PDCCH candidates from the search spaces in the CORESET subsets and CORESETs are aggregated into a PDCCH candidate with a higher aggregation level. In this case, the terminal can detect all possible PDCCH candidates (including the aggregated PDCCH candidates) in the aggregated large search space when blindly detecting the PDCCHs.

Based on the above resource configuration mode, the resource configuration indication may be performed in the following way.

The association relationship of CORESET subsets may be pre-agreed, for example, the CORESET subsets with odd or even numbers have an association relationship, or the CORESET subsets of which the number modulo X operation is equal to 0 have an association relationship (where X is an agreed value or a configuration value). The association relationship of CORESET subsets may also be indicated by the network side to the terminal, for example, sent to the terminal through high-layer signaling.

The association relationship between Search Spaces (SSs) may be pre-agreed, for example, according to the numbers thereof or other principle. For example, Y (Y is an integer greater than or equal to 1) search spaces with the minimum number in each associated CORESET subset and each associated CORESET without subsets are one-to-one associated by default. For example, the CORESET subset 1 includes SS1 and SS2, and the CORESET includes SS3, SS4 and SS5. At this time, Y=2 can be set, and then SS1 is associated with SS3 by default, and SS2 is associated with SS4 by default. The association relationship of search spaces may also be indicated by the network side to the terminal, for example, configured through high-layer signaling.

The association relationship of PDCCH candidates may be pre-agreed, for example, according to the numbers thereof or other principle. For example, Z (Z is an integer greater than or equal to 1) PDCCH candidates with the minimum number in each associated SS are one-to-one associated by default. For example, SS1 includes PDCCH candidate 1 and PDCCH candidate 2, and SS2 includes PDCCH candidate 3, PDCCH candidate 4 and PDCCH candidate 5. At this time, Z=2 can be set, and then the PDCCH candidate 1 is associated with the PDCCH candidate 3 by default, and the PDCCH candidate 2 is associated with the PDCCH candidate 4 by default. The association relationship of PDCCH candidates may also be indicated by the network side to the terminal, for example, configured through high-layer signaling.

In order to reduce the complexity of the association operation of PDCCH candidates, it can be agreed that the association of PDCCH candidates is limited to PDCCH candidates with the same aggregation level. For example, the PDCCH candidate 1 in SS1 of the CORESET subset 1 is associated with the PDCCH candidate 2 in SS2 of the CORESET subset 2 to form a PDCCH candidate with a higher AL, where the candidate 1 and candidate 2 have the same AL. That is, in the associated SS, the PDCCH candidates are respectively associated according to AL.

Based on the same technical concept, embodiments of the present application provide a base station, which can implement the method at the base station side in the foregoing embodiments.

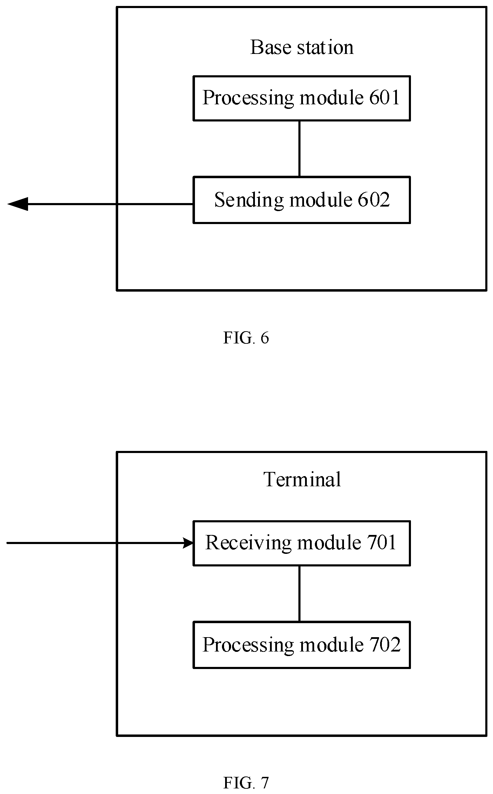

Referring to FIG. 6, the base station includes: a processing module 601 and a sending module 602.

The processing module 601 is configured to make same DCI be carried on N PDCCH candidates for DCI cooperative transmission, where at least one of the N PDCCH candidates corresponds to at least two TCI states, and N is an integer greater than or equal to 1.

The sending module 602 is configured to send the same DCI through a PDCCH among the N PDCCH candidates for DCI cooperative transmission. For the functions of the modules in the above-mentioned base station, reference may be made to the description of the functions implemented in the foregoing embodiments, which will not be repeated here.

Based on the same technical concept, embodiments of the present application provide a terminal, which can implement the method at the terminal side in the foregoing embodiments.

Referring to FIG. 7, the terminal includes: a receiving module 701 and a processing module 702.

The receiving module 701 is configured to detect PDCCHs among N PDCCH candidates for DCI cooperative transmission, where the N PDCCH candidates are used to carry same DCI, at least one of the N PDCCH candidates corresponds to at least two TCI states, and N is an integer greater than or equal to 1.

The processing module 702 is configured to merge DCI transmitted by the detected PDCCHs among the PDCCH candidates.

For the functions of the modules in the above-mentioned terminal, reference may be made to the description of the functions implemented in the foregoing embodiments, which will not be repeated here.

Based on the same technical concept, an embodiment of the present application further provides a base station, which can implement the functions of the base station side in the foregoing embodiments.

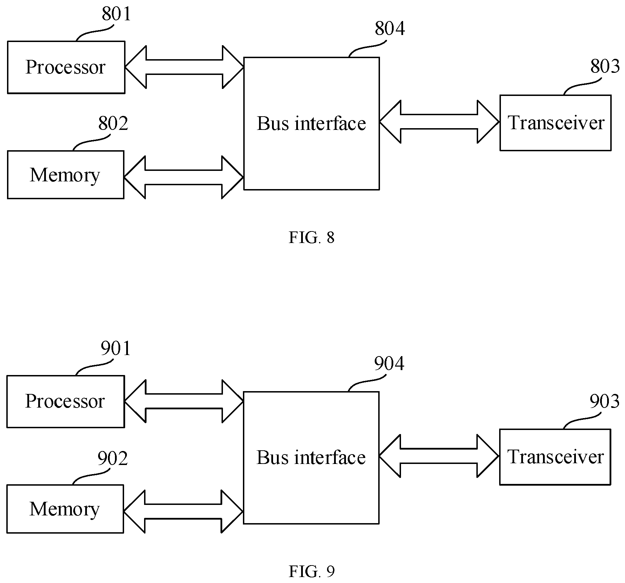

FIG. 8 exemplarily shows a structural schematic diagram of the base station in the embodiment of the present application. As shown, the base station may include: a processor 801, a memory 802, a transceiver 803 and a bus interface 804.

The memory 802 may store computer instructions used by the processor 801 in performing operations. The transceiver 803 is configured to receive and send the data under the control of the processor 801. The processor 801 is configured to read the computer instructions stored in the memory 802, is responsible for managing the bus architecture and general processing, and performs the following operations:
making same DCI be carried on N PDCCH candidates for DCI cooperative transmission, where at least one of the N PDCCH candidates corresponds to at least two TCI states, and N is an integer greater than or equal to 1;
sending the DCI through a PDCCH among the N PDCCH candidates for DCI cooperative transmission.

Optionally, at least one of the at least two TCI states corresponding to the at least one PDCCH candidate is associated with a Control Resource Set, CORESET; or at least one of the at least two TCI states corresponding to the at least one PDCCH candidate is associated with a CORESET subset in a CORESET, where the CORESET includes at least one CORESET subset, each of the at least one CORESET subset is configured with a corresponding TCI state, and the at least one CORESET subset corresponds to a part or all of a resource corresponding to the CORESET.

Optionally, the PDCCH candidate corresponding to at least two TCI states is formed by aggregation of at least two PDCCH candidates with lower aggregation levels.

Optionally, at least two of the at least two PDCCH candidates with lower levels are from at least two CORESETs; or the at least two PDCCH candidates with lower levels are from at least two CORESET subsets, and the at least two CORESET subsets belong to a same CORESET or at least two CORESETs and are respectively configured with corresponding TCI states, where each of the at least two CORESET subsets corresponds to a part of a resource corresponding to a CORESET to which the each of the at least two CORESET subsets belongs; or at least one of the at least two PDCCH candidates with lower levels is from at least one CORESET, and at least another one of the at least two PDCCH candidates with lower levels is from at least one CORESET subset which corresponds to a part of a resource corresponding to a CORESET to which the at least one CORESET subset belongs.

Optionally, a search space to which the PDCCH candidate formed by aggregation of the at least two PDCCH candidates with lower aggregation levels belong is formed by aggregation of at least two search spaces.

Optionally, at least two of the at least two search spaces are from at least two CORESETs; or the at least two search spaces are from at least two CORESET subsets, and the at least two CORESET subsets belong to a same CORESET or at least two CORESETs and are respectively configured with corresponding TCI states, where each of the at least two CORESET subsets corresponds to a part of a resource corresponding to a CORESET to which the each of the at least two CORESET subsets belongs; or at least one of the at least two search spaces is from at least one CORESET, and at least another one of the at least two search spaces is from at least one CORESET subset which corresponds to a part of a resource corresponding to a CORESET to which the at least one CORESET subset belongs.

Optionally, in the CORESET including CORESET subsets, time-frequency resources corresponding to at least two CORESET subsets satisfy one of following conditions:
frequency domain resources corresponding to at least two CORESET subsets do not overlap;
time domain resources corresponding to at least two CORESET subsets do not overlap;
frequency domain resources corresponding to at least two CORESET subsets do not overlap, and time domain resources corresponding to at least two CORESET subsets do not overlap.

Optionally, the DCI sent through at least one of the N PDCCH candidates includes cooperative transmission resource indication information for indicating an association relationship between transmission resources for DCI cooperative transmission, and the association relationship between transmission resources includes an association relationship between PDCCH candidates for DCI cooperative transmission or an association relationship between at least one kind of related information of PDCCH candidates for DCI cooperative transmission.

Optionally, the performed operations further include: sending indication information of an association relationship between transmission resources for DCI cooperative transmission to a terminal through high-layer signaling; where the association relationship between transmission resources includes an association relationship between PDCCH candidates for DCI cooperative transmission or an association relationship between at least one kind of related information of PDCCH candidates for DCI cooperative transmission.

Optionally, an association relationship between transmission resources for DCI cooperative transmission is pre-agreed between the base station and a terminal, where the association relationship between transmission resources includes an association relationship between PDCCH candidates for DCI cooperative transmission or an association relationship between at least one kind of related information of PDCCH candidates for DCI cooperative transmission.

Optionally, the association relationship between at least one kind of related information includes at least one of:
an association relationship between transmission configuration indicator states of CORESETs and/or CORESET subsets to which the N PDCCH candidates belong, where one CORESET subset is configured with a corresponding TCI state, and one CORESET subset corresponds to a part or all of a resource corresponding to a CORESET to which the one CORESET subset belongs;
an association relationship between search spaces to which the N PDCCH candidates belong;
an association relationship between CORESETs and/or CORESET subsets to which the N PDCCH candidates belong, where one CORESET subset is configured with a corresponding TCI state, and one CORESET subset corresponds to a part or all of a resource corresponding to a CORESET to which the one CORESET subset belongs;
the PDCCH candidate corresponding to at least two TCI states among the N PDCCH candidates is formed by aggregation of at least two PDCCH candidates with lower aggregation levels, and the association relationship includes an association relationship between aggregation levels of the at least two PDCCH candidates with lower aggregation levels.

The bus architecture may include any numbers of interconnected buses and bridges, and specifically link various circuits of one or more processors represented by the processor 801 and the memory represented by the memory 802. The bus architecture may further link various other circuits such as peripheral device, voltage regulator and power management circuit, which are all well known in the art and thus will not be further described again herein. The bus interface provides an interface. The processor 801 is responsible for managing the bus architecture and general processing, and the memory 802 may store the data used by the processor 801 when performing the operations.

The procedure disclosed by the embodiment of the present application may be applied in the processor 801 or implemented by the processor 801. In the implementation process, each step of the signal processing flow may be completed by the integrated logic circuit of hardware in the processor 801 or the instruction in the form of software. The processor 801 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 802, and the processor 801 reads the information in the memory 802 and completes the steps of the signal processing flow in combination with its hardware.

Specifically, the processor 801 is configured to read the computer instructions in the memory 802 and execute the functions implemented by the base station side in the foregoing embodiments.

It should be noted here that the above-mentioned base station provided in this embodiment of the present application can implement all the method steps implemented in the above-mentioned method embodiment and can achieve the same technical effects. The parts and beneficial effects in this embodiment same as those in the method embodiment will not be described here in detail.

Based on the same technical concept, embodiments of the present application provide a terminal, which can implement the functions of the terminal side in the foregoing embodiments.

FIG. 9 exemplarily shows a structural schematic diagram of the terminal in the embodiment of the present application. As shown, the terminal may include: a processor 901, a memory 902, a transceiver 903 and a bus interface 904.

The memory 902 may store computer instructions used by the processor 901 in performing operations. The transceiver 903 is configured to receive and send the data under the control of the processor 901. The processor 901 is configured to read the computer instructions stored in the memory 902, is responsible for managing the bus architecture and general processing, and performs the following operations:
detecting PDCCHs among N PDCCH candidates for DCI cooperative transmission, where the N PDCCH candidates are used to carry same DCI, at least one of the N PDCCH candidates corresponds to at least two TCI states, and N is an integer greater than or equal to 1;
merging DCI sent by the detected PDCCHs among the PDCCH candidates.

Optionally, at least one of the at least two TCI states corresponding to the at least one PDCCH candidate is associated with a Control Resource Set, CORESET; or at least one of the at least two TCI states corresponding to the at least one PDCCH candidate is associated with a CORESET subset in a CORESET, where the CORESET includes at least one CORESET subset, each of the at least one CORESET subset is configured with a corresponding TCI state, and the at least one CORESET subset corresponds to a part or all of a resource corresponding to the CORESET.

Optionally, the PDCCH candidate corresponding to at least two TCI states is formed by aggregation of at least two PDCCH candidates with lower aggregation levels.

Optionally, at least two of the at least two PDCCH candidates with lower levels are from at least two CORESETs; or the at least two PDCCH candidates with lower levels are from at least two CORESET subsets, and the at least two CORESET subsets belong to a same CORESET or at least two CORESETs and are respectively configured with corresponding TCI states, where each of the at least two CORESET subsets corresponds to a part of a resource corresponding to a CORESET to which the each of the at least two CORESET subsets belongs; or at least one of the at least two PDCCH candidates with lower levels is from at least one CORESET, and at least another one of the at least two PDCCH candidates with lower levels is from at least one CORESET subset which corresponds to a part of a resource corresponding to a CORESET to which the at least one CORESET subset belongs.

Optionally, a search space to which the PDCCH candidates formed by aggregation of the at least two PDCCH candidates with lower aggregation levels belong is formed by aggregation of at least two search spaces.

Optionally, at least two of the at least two search spaces are from at least two CORESETs; or the at least two search spaces are from at least two CORESET subsets, and the at least two CORESET subsets belong to a same CORESET or at least two CORESETs and are respectively configured with corresponding TCI states, and each of the at least two CORESET subsets corresponds to a part of a resource corresponding to a CORESET to which the each of the at least two CORESET subsets belongs; or at least one of the at least two search spaces is from at least one CORESET, and at least another one of the at least two search spaces is from at least one CORESET subset which corresponds to a part of a resource corresponding to a CORESET to which the at least one CORESET subset belongs.

Optionally, in the CORESET including CORESET subsets, time-frequency resources corresponding to at least two CORESET subsets satisfy one of following conditions:
frequency domain resources corresponding to at least two CORESET subsets do not overlap;
time domain resources corresponding to at least two CORESET subsets do not overlap;
frequency domain resources corresponding to at least two CORESET subsets do not overlap, and time domain resources corresponding to at least two CORESET subsets do not overlap.

Optionally, the DCI sent through at least one of the N PDCCH candidates includes cooperative transmission resource indication information for indicating an association relationship between transmission resources for DCI cooperative transmission, and the association relationship between transmission resources includes an association relationship between PDCCH candidates for DCI cooperative transmission or an association relationship between at least one kind of related information of PDCCH candidates for DCI cooperative transmission.

Optionally, the performed operations further include: receiving indication information of an association relationship between transmission resources for DCI cooperative transmission sent by a base station through high-layer signaling; where the association relationship between transmission resources includes an association relationship between PDCCH candidates for DCI cooperative transmission or an association relationship between at least one kind of related information of PDCCH candidates for DCI cooperative transmission.

Optionally, an association relationship between transmission resources for DCI cooperative transmission is pre-agreed between the terminal and a base station, where the association relationship between transmission resources includes an association relationship between PDCCH candidates for DCI cooperative transmission or an association relationship between at least one kind of related information of PDCCH candidates for DCI cooperative transmission.

Optionally, the association relationship between at least one kind of related information includes at least one of:
an association relationship between transmission configuration indicator states of CORESETs and/or CORESET subsets to which the N PDCCH candidates belong, where one CORESET subset is configured with a corresponding TCI state, and one CORESET subset corresponds to a part or all of a resource corresponding to a CORESET to which the one CORESET subset belongs;
an association relationship between search spaces to which the N PDCCH candidates belong;
an association relationship between CORESETs and/or CORESET subsets to which the N PDCCH candidates belong, where one CORESET subset is configured with a corresponding TCI state, and one CORESET subset corresponds to a part or all of a resource corresponding to a CORESET to which the one CORESET subset belongs;
the PDCCH candidate corresponding to at least two TCI states among the N PDCCH candidates is formed by aggregation of at least two PDCCH candidates with lower aggregation levels, and the association relationship includes an association relationship between aggregation levels of the at least two PDCCH candidates with lower aggregation levels.

The bus architecture may include any numbers of interconnected buses and bridges, and specifically link various circuits of one or more processors represented by the processor 901 and the memory represented by the memory 902. The bus architecture may further link various other circuits such as peripheral device, voltage regulator and power management circuit, which are all well known in the art and thus will not be further described again herein. The bus interface provides an interface. The processor 901 is responsible for managing the bus architecture and general processing, and the memory 902 may store the data used by the processor 901 when performing the operations.

The procedure disclosed by the embodiment of the present application may be applied in the processor 901 or implemented by the processor 901. In the implementation process, each step of the signal processing flow may be completed by the integrated logic circuit of hardware in the processor 901 or the instruction in the form of software. The processor 901 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the present application. The general-purpose processor may be a microprocessor or any conventional processor or the like. The steps of the method disclosed in combination with the embodiments of the present application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 902, and the processor 901 reads the information in the memory 902 and completes the steps of the signal processing flow in combination with its hardware. Specifically, the processor 901 is configured to read computer instructions in the memory 902 and execute functions implemented at the terminal side.

It should be noted here that the above-mentioned terminal provided in this embodiment of the present application can implement all the method steps implemented in the above-mentioned method embodiment and can achieve the same technical effects. The parts and beneficial effects in this embodiment same as those in the method embodiment will not be described here in detail.

An embodiment of the present application further provides a computer readable storage medium storing computer executable instructions which are configured to cause the computer to execute the method performed by the base station in the above-mentioned embodiments.

An embodiment of the present application further provides a computer readable storage medium storing computer executable instructions which are configured to cause the computer to execute the method performed by the terminal in the above-mentioned embodiments.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, CD-ROMs, optical memories and the like) including computer usable program codes therein.

The present application is described by reference to the flow charts and/or the block diagrams of the methods, the devices (systems) and the computer program products according to the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

## Claims

1. A control information communication method, comprising:
making (S101), by a base station, same Downlink Control Information, DCI, be carried on N Physical Downlink Control Channel, PDCCH, candidates for DCI cooperative transmission, wherein at least one of the N PDCCH candidates corresponds to at least two Transmission Configuration Indicator, TCI, states, and N is an integer greater than or equal to 1;
sending (S102), by the base station, the same DCI through a PDCCH among the N PDCCH candidates for DCI cooperative transmission;
**characterized in that**:
the DCI sent through at least one of the N PDCCH candidates comprises cooperative transmission resource indication information for indicating an association relationship between transmission resources for DCI cooperative transmission, and the association relationship between transmission resources comprises an association relationship between PDCCH candidates for DCI cooperative transmission or an association relationship between at least one kind of related information of PDCCH candidates for DCI cooperative transmission;
or
the method further comprises: sending, by the base station, indication information of an association relationship between transmission resources for DCI cooperative transmission to a terminal through high-layer signaling; wherein the association relationship between transmission resources comprises an association relationship between PDCCH candidates for DCI cooperative transmission or an association relationship between at least one kind of related information of PDCCH candidates for DCI cooperative transmission;
or
wherein an association relationship between transmission resources for DCI cooperative transmission is pre-agreed between the base station and a terminal, wherein the association relationship between transmission resources comprises an association relationship between PDCCH candidates for DCI cooperative transmission or an association relationship between at least one kind of related information of PDCCH candidates for DCI cooperative transmission.

2. The method according to claim 1, wherein at least one of the at least two TCI states corresponding to the at least one PDCCH candidate is associated with a Control Resource Set, CORESET; or
at least one of the at least two TCI states corresponding to the at least one PDCCH candidate is associated with a CORESET subset in a CORESET, wherein the CORESET comprises at least one CORESET subset, each of the at least one CORESET subset is configured with a corresponding TCI state, and the at least one CORESET subset corresponds to a part or all of a resource corresponding to the CORESET.

3. The method according to claim 1, wherein the PDCCH candidate corresponding to at least two TCI states is formed by aggregation of at least two PDCCH candidates with lower aggregation levels.

4. The method according to claim 3, wherein at least two of the at least two PDCCH candidates with lower levels are from at least two CORESETs; or
the at least two PDCCH candidates with lower levels are from at least two CORESET subsets, and the at least two CORESET subsets belong to a same CORESET or at least two CORESETs and are respectively configured with corresponding TCI states, wherein each of the at least two CORESET subsets corresponds to a part of a resource corresponding to a CORESET to which the each of the at least two CORESET subsets belongs; or
at least one of the at least two PDCCH candidates with lower levels is from at least one CORESET, and at least another one of the at least two PDCCH candidates with lower levels is from at least one CORESET subset which corresponds to a part of a resource corresponding to a CORESET to which the at least one CORESET subset belongs.

5. The method according to claim 3, wherein a search space to which the PDCCH candidate formed by aggregation of the at least two PDCCH candidates with lower aggregation levels belong is formed by aggregation of at least two search spaces.

6. The method according to claim 5, wherein at least two of the at least two search spaces are from at least two CORESETs; or
the at least two search spaces are from at least two CORESET subsets, and the at least two CORESET subsets belong to a same CORESET or at least two CORESETs and are respectively configured with corresponding TCI states, wherein each of the at least two CORESET subsets corresponds to a part of a resource corresponding to a CORESET to which the each of the at least two CORESET subsets belongs; or
at least one of the at least two search spaces is from at least one CORESET, and at least another one of the at least two search spaces is from at least one CORESET subset which corresponds to a part of a resource corresponding to a CORESET to which the at least one CORESET subset belongs.

7. The method according to claim 2, 4 or 6, wherein in the CORESET comprising CORESET subsets, time-frequency resources corresponding to at least two CORESET subsets satisfy one of following conditions:
frequency domain resources corresponding to at least two CORESET subsets do not overlap;
time domain resources corresponding to at least two CORESET subsets do not overlap; or
frequency domain resources corresponding to at least two CORESET subsets do not overlap, and time domain resources corresponding to at least two CORESET subsets do not overlap.

8. The method according to claim 1, wherein the association relationship between at least one kind of related information comprises at least one of:
an association relationship between transmission configuration indicator states of CORESETs and/or CORESET subsets to which the N PDCCH candidates belong, wherein one CORESET subset is configured with a corresponding TCI state, and one CORESET subset corresponds to a part or all of a resource corresponding to a CORESET to which the one CORESET subset belongs;
an association relationship between search spaces to which the N PDCCH candidates belong;
an association relationship between CORESETs and/or CORESET subsets to which the N PDCCH candidates belong, wherein one CORESET subset is configured with a corresponding TCI state, and one CORESET subset corresponds to a part or all of a resource corresponding to a CORESET to which the one CORESET subset belongs;
the PDCCH candidate corresponding to at least two TCI states among the N PDCCH candidates is formed by aggregation of at least two PDCCH candidates with lower aggregation levels, and the association relationship comprises an association relationship between aggregation levels of the at least two PDCCH candidates with lower aggregation levels.

9. A control information communication method, comprising:
detecting (S201), by a terminal, Physical Downlink Control Channels, PDCCHs, among N PDCCH candidates for Downlink Control Information, DCI, cooperative transmission, wherein the N PDCCH candidates are used to carry same DCI, at least one of the N PDCCH candidates corresponds to at least two Transmission Configuration Indicator, TCI, states, and N is an integer greater than or equal to 1;
merging (S202), by the terminal, DCI sent by the detected PDCCHs among the PDCCH candidates;
**characterized in that**:
the DCI sent through at least one of the N PDCCH candidates comprises cooperative transmission resource indication information for indicating an association relationship between transmission resources for DCI cooperative transmission, and the association relationship between transmission resources comprises an association relationship between PDCCH candidates for DCI cooperative transmission or an association relationship between at least one kind of related information of PDCCH candidates for DCI cooperative transmission;
or
the method further comprises:
receiving, by the terminal, indication information of an association relationship between transmission resources for DCI cooperative transmission sent by a base station through high-layer signaling; wherein the association relationship between transmission resources comprises an association relationship between PDCCH candidates for DCI cooperative transmission or an association relationship between at least one kind of related information of PDCCH candidates for DCI cooperative transmission;
or
wherein an association relationship between transmission resources for DCI cooperative transmission is pre-agreed between the terminal and a base station, wherein the association relationship between transmission resources comprises an association relationship between PDCCH candidates for DCI cooperative transmission or an association relationship between at least one kind of related information of PDCCH candidates for DCI cooperative transmission.

10. The method according to claim 9,
wherein the association relationship between at least one kind of related information comprises at least one of:
an association relationship between transmission configuration indicator states of CORESETs and/or CORESET subsets to which the N PDCCH candidates belong, wherein one CORESET subset is configured with a corresponding TCI state, and one CORESET subset corresponds to a part or all of a resource corresponding to a CORESET to which the one CORESET subset belongs;
an association relationship between search spaces to which the N PDCCH candidates belong;
an association relationship between CORESETs and/or CORESET subsets to which the N PDCCH candidates belong, wherein one CORESET subset is configured with a corresponding TCI state, and one CORESET subset corresponds to a part or all of a resource corresponding to a CORESET to which the one CORESET subset belongs;
the PDCCH candidate corresponding to at least two TCI states among the N PDCCH candidates is formed by aggregation of at least two PDCCH candidates with lower aggregation levels, and the association relationship comprises an association relationship between aggregation levels of the at least two PDCCH candidates with lower aggregation levels.

11. A base station, comprising:
a processing module (601) configured to make same Downlink Control Information, DCI, be carried on N Physical Downlink Control Channel, PDCCH, candidates for DCI cooperative transmission, wherein at least one of the N PDCCH candidates corresponds to at least two Transmission Configuration Indicator, TCI, states, and N is an integer greater than or equal to 1;
a sending module (602) configured to send the same DCI through a PDCCH among the N PDCCH candidates for DCI cooperative transmission;
**characterized in that**:
the DCI sent through at least one of the N PDCCH candidates comprises cooperative transmission resource indication information for indicating an association relationship between transmission resources for DCI cooperative transmission, and the association relationship between transmission resources comprises an association relationship between PDCCH candidates for DCI cooperative transmission or an association relationship between at least one kind of related information of PDCCH candidates for DCI cooperative transmission;
or
the sending module is further configured to send indication information of an association relationship between transmission resources for DCI cooperative transmission to a terminal through high-layer signaling; wherein the association relationship between transmission resources comprises an association relationship between PDCCH candidates for DCI cooperative transmission or an association relationship between at least one kind of related information of PDCCH candidates for DCI cooperative transmission;
or
an association relationship between transmission resources for DCI cooperative transmission is pre-agreed between the base station and a terminal, wherein the association relationship between transmission resources comprises an association relationship between PDCCH candidates for DCI cooperative transmission or an association relationship between at least one kind of related information of PDCCH candidates for DCI cooperative transmission.

12. The base station according to claim 11, wherein at least one of the at least two TCI states corresponding to the at least one PDCCH candidate is associated with a Control Resource Set, CORESET; or
at least one of the at least two TCI states corresponding to the at least one PDCCH candidate is associated with a CORESET subset in a CORESET, wherein the CORESET comprises at least one CORESET subset, each of the at least one CORESET subset is configured with a corresponding TCI state, and the at least one CORESET subset corresponds to a part or all of a resource corresponding to the CORESET.

13. The base station according to claim 11, wherein the PDCCH candidate corresponding to at least two TCI states is formed by aggregation of at least two PDCCH candidates with lower aggregation levels.

14. A terminal, comprising:
a receiving module (701) configured to detect Physical Downlink Control Channels, PDCCHs, among N PDCCH candidates for Downlink Control Information, DCI, cooperative transmission, wherein the N PDCCH candidates are used to carry same DCI, at least one of the N PDCCH candidates corresponds to at least two Transmission Configuration Indicator, TCI, states, and N is an integer greater than or equal to 1;
a processing module (702) configured to merge DCI sent by the detected PDCCHs among the PDCCH candidates;
**characterized in that**:
the DCI sent through at least one of the N PDCCH candidates comprises cooperative transmission resource indication information for indicating an association relationship between transmission resources for DCI cooperative transmission, and the association relationship between transmission resources comprises an association relationship between PDCCH candidates for DCI cooperative transmission or an association relationship between at least one kind of related information of PDCCH candidates for DCI cooperative transmission;
or
the receiving module is further configured to receive indication information of an association relationship between transmission resources for DCI cooperative transmission sent by a base station through high-layer signaling; wherein the association relationship between transmission resources comprises an association relationship between PDCCH candidates for DCI cooperative transmission or an association relationship between at least one kind of related information of PDCCH candidates for DCI cooperative transmission;
or
an association relationship between transmission resources for DCI cooperative transmission is pre-agreed between the terminal and a base station, wherein the association relationship between transmission resources comprises an association relationship between PDCCH candidates for DCI cooperative transmission or an association relationship between at least one kind of related information of PDCCH candidates for DCI cooperative transmission.

## Patentansprüche

1. Ein Verfahren zur Übertragung von Steuerinformation, aufweisend:
Erstellen (S 101), durch eine Basisstation, derselben Downlink-Steuerinformation, DCI, die auf N für die kooperative DCI-Übertragung in Frage kommenden physikalischen Downlink-Steuerkanälen, PDCCH, übertragen werden soll, wobei zumindest einer der N in Frage kommenden PDCCHs zumindest zwei Zuständen eines Übertragungskonfigurationsindikators, TCI, entspricht, wobei N eine ganze Zahl größer oder gleich 1 ist;
Senden (S 102), durch die Basisstation, derselben DCI über einen PDCCH unter den N für die kooperative DCI-Übertragung in Frage kommenden PDCCHs;
**dadurch gekennzeichnet, dass**:
die DCI, die über zumindest einen der N in Frage kommenden PDCCHs gesendet wird, kooperative Übertragungsressourcen-Anzeigeinformation, zum Anzeigen einer Zuordnungsbeziehung zwischen Übertragungsressourcen für die kooperative DCI-Übertragung, aufweist, und die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist;
oder
das Verfahren ferner aufweist: Senden, durch die Basisstation, von Anzeigedaten einer Zuordnungsbeziehung zwischen Übertragungsressourcen für die DCI-kooperative Übertragung an ein Endgerät über eine Signalisierung auf höheren Schichten; wobei die Zuordnungsbeziehung zwischen Übertragungsressourcen eine Zuordnungsbeziehung zwischen für die DCI-kooperative Übertragung in Frage kommenden PDCCHs oder eine Zuordnungsbeziehung zwischen zumindest einer Art von zugehöriger Information von für die DCI-kooperative Übertragung in Frage kommenden PDCCHs aufweist;
oder
wobei eine Zuordnungsbeziehung zwischen Übertragungsressourcen für die kooperative DCI-Übertragung zwischen der Basisstation und einem Endgerät vorab vereinbart wird, wobei die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist.

2. Das Verfahren nach Anspruch 1, wobei zumindest einer der zumindest zwei TCI-Zustände, die dem zumindest einen in Frage kommenden PDCCH entsprechen, mit einem Steuerungsressourcensatz (CORESET) assoziiert ist; oder
zumindest einer der zumindest zwei TCI-Zustände, die dem zumindest einen in Frage kommenden PDCCH entsprechen, mit einer CORESET-Teilmenge in einem CORESET assoziiert ist, wobei der CORESET zumindest eine CORESET-Teilmenge aufweist, jede der zumindest einen CORESET-Teilmenge mit einem entsprechenden TCI-Zustand konfiguriert ist und die zumindest eine CORESET-Teilmenge einem Teil oder der Gesamtheit einer dem CORESET entsprechenden Ressource entspricht.

3. Das Verfahren nach Anspruch 1, wobei der in Frage kommende PDCCH, der zumindest zwei TCI-Zuständen entspricht, durch Aggregation von zumindest zwei in Frage kommenden PDCCHs mit niedrigeren Aggregationsstufen gebildet wird.

4. Das Verfahren nach Anspruch 3, wobei zumindest zwei der zumindest zwei in Frage kommenden PDCCHs mit niedrigeren Pegeln aus zumindest zwei CORESETs stammen; oder
die zumindest zwei in Frage kommenden PDCCHs mit niedrigeren Pegeln aus zumindest zwei CORESET-Teilmengen stammen und die zumindest zwei CORESET-Teilmengen zu einem gleichen CORESET oder zumindest zwei CORESETs gehören und jeweils mit entsprechenden TCI-Zuständen konfiguriert sind, wobei jede der zumindest zwei CORESET-Teilmengen einem Teil einer Ressource entspricht, die einem CORESET entspricht, zu dem jede der zumindest zwei CORESET-Teilmengen gehört; oder
zumindest einer der zumindest zwei in Frage kommenden PDCCHs mit niedrigeren Pegeln aus zumindest einem CORESET stammt und zumindest ein weiterer der zumindest zwei in Frage kommenden PDCCHs mit niedrigeren Pegeln aus zumindest einer CORESET-Teilmenge stammt, die einem Teil einer Ressource entspricht, die einem CORESET entspricht, zu dem die zumindest eine CORESET-Teilmenge gehört.

5. Das Verfahren nach Anspruch 3, wobei ein Suchraum, zu dem der in Frage kommende, durch Aggregation der zumindest zwei in Frage kommenden PDCCHs mit niedrigeren Aggregationsstufen gebildete PDCCH gehört, durch Aggregation von zumindest zwei Suchräumen gebildet wird.

6. Das Verfahren nach Anspruch 5, wobei zumindest zwei der zumindest zwei Suchräume aus zumindest zwei CORESETs stammen; oder
die zumindest zwei Suchräume aus zumindest zwei CORESET-Teilmengen stammen und die zumindest zwei CORESET-Teilmengen zu einem gleichen CORESET oder zumindest zwei CORESETs gehören und jeweils mit entsprechenden TCI-Zuständen konfiguriert sind, wobei jede der zumindest zwei CORESET-Teilmengen einem Teil einer Ressource entspricht, die einem CORESET entspricht, zu dem jede der zumindest zwei CORESET-Teilmengen gehört; oder
zumindest einer der zumindest zwei Suchräume aus zumindest einem CORESET stammt und zumindest ein weiterer der zumindest zwei Suchräume aus zumindest einer CORESET-Teilmenge stammt, die einem Teil einer Ressource entspricht, die einem CORESET entspricht, zu dem die zumindest eine CORESET-Teilmenge gehört.

7. Das Verfahren nach Anspruch 2, 4 oder 6, wobei in dem CORESET, welcher CORESET-Teilmengen aufweist, Zeit-Frequenz-Ressourcen, die zumindest zwei CORESET-Teilmengen entsprechen, eine der folgenden Bedingungen erfüllen:
Frequenzbereichsressourcen, die zumindest zwei CORESET-Teilmengen entsprechen, überlappen sich nicht;
Zeitbereichsressourcen, die zumindest zwei CORESET-Teilmengen entsprechen, überlappen sich nicht; oder
Frequenzbereichsressourcen, die zumindest zwei CORESET-Teilmengen entsprechen, überlappen sich nicht, und Zeitbereichsressourcen, die zumindest zwei CORESET-Teilmengen entsprechen, überlappen sich nicht.

8. Das Verfahren nach Anspruch 1, wobei die Zuordnungsbeziehung zwischen zumindest einer Art von zugehöriger Information zumindest eines der folgenden Elemente aufweist:
eine Zuordnungsbeziehung zwischen Übertragungskonfigurationsanzeigestatus von CORESETs und/oder CORESET-Teilmengen, zu denen die N in Frage kommenden PDCCHs gehören, wobei eine CORESET-Teilmenge mit einem entsprechenden TCI-Status konfiguriert ist und eine CORESET-Teilmenge einem Teil oder der Gesamtheit einer Ressource entspricht, die einem CORESET entspricht, zu dem die eine CORESET-Teilmenge gehört;
eine Zuordnungsbeziehung zwischen Suchräumen, zu denen die N in Frage kommenden PDCCHs gehören;
eine Zuordnungsbeziehung zwischen CORESETs und/oder CORESET-Teilmengen, zu denen die N in Frage kommenden PDCCHs gehören, wobei eine CORESET-Teilmenge mit einem entsprechenden TCI-Zustand konfiguriert ist und eine CORESET-Teilmenge einem Teil oder der Gesamtheit einer Ressource entspricht, die einem CORESET entspricht, zu dem die eine CORESET-Teilmenge gehört;
der in Frage kommende PDCCH, der zumindest zwei TCI-Zuständen unter den N in Frage kommenden PDCCHs entspricht, wird durch Aggregation von zumindest zwei in Frage kommenden PDCCHs mit niedrigeren Aggregationsstufen gebildet, und die Zuordnungsbeziehung umfasst eine Zuordnungsbeziehung zwischen Aggregationsstufen der zumindest zwei in Frage kommenden PDCCHs mit niedrigeren Aggregationsstufen.

9. Ein Verfahren zur Übertragung von Steuerungsinformation, aufweisend:
Erkennen (S201), durch ein Endgerät, von physikalischen Downlink-Steuerungskanälen, PDCCHs, unter N zur kooperativen Übertragung für Downlink-Steuerungsinformation, DCI, in Frage kommenden PDCCHs, wobei die N in Frage kommenden PDCCHs zur Übertragung derselben DCI verwendet werden, wobei zumindest einer der N in Frage kommenden PDCCHs zumindest zwei Zuständen eines Übertragungskonfigurationsindikators, TCI, entspricht, wobei N eine ganze Zahl größer oder gleich 1 ist;
Zusammenführen (S202), durch das Endgerät, der von den unter den in Frage kommenden PDCCHs erkannten PDCCHs gesendeten DCI;
**dadurch gekennzeichnet, dass**:
die DCI, die über zumindest einen der N in Frage kommenden PDCCHs gesendet wird, kooperative Übertragungsressourcen-Anzeigeinformation zum Anzeigen einer Zuordnungsbeziehung zwischen Übertragungsressourcen für die kooperative DCI-Übertragung aufweist, und die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist;
oder
das Verfahren ferner aufweist:
Empfangen, durch das Endgerät, von Anzeigedaten einer Zuordnungsbeziehung zwischen Übertragungsressourcen für die kooperative DCI-Übertragung, die von einer Basisstation über eine Signalisierung auf höheren Schichten gesendet werden; wobei die Zuordnungsbeziehung zwischen den Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist;
oder
wobei eine Zuordnungsbeziehung zwischen Übertragungsressourcen für die kooperative DCI-Übertragung zwischen dem Endgerät und einer Basisstation vorab vereinbart wird, wobei die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist.

10. Das Verfahren nach Anspruch 9,
wobei die Zuordnungsbeziehung zwischen zumindest einer Art von zugehöriger Information zumindest eines der folgenden Elemente aufweist:
eine Zuordnungsbeziehung zwischen Übertragungskonfigurationsindikatorzuständen von CORESETs und/oder CORESET-Teilmengen, zu denen die N in Frage kommenden PDCCHs gehören, wobei eine CORESET-Teilmenge mit einem entsprechenden TCI-Zustand konfiguriert ist und eine CORESET-Teilmenge einem Teil oder der Gesamtheit einer Ressource entspricht, die einem CORESET entspricht, zu dem die eine CORESET-Teilmenge gehört;
eine Zuordnungsbeziehung zwischen Suchräumen, zu denen die N in Frage kommenden PDCCHs gehören;
eine Zuordnungsbeziehung zwischen CORESETs und/oder CORESET-Teilmengen, zu denen die N in Frage kommenden PDCCHs gehören, wobei eine CORESET-Teilmenge mit einem entsprechenden TCI-Zustand konfiguriert ist und eine CORESET-Teilmenge einem Teil oder der Gesamtheit einer Ressource entspricht, die einem CORESET entspricht, zu dem die eine CORESET-Teilmenge gehört;
der in Frage kommende PDCCH, der zumindest zwei TCI-Zuständen unter den N in Frage kommenden PDCCHs entspricht, durch Aggregation von zumindest zwei in Frage kommenden PDCCHs mit niedrigeren Aggregationsstufen gebildet wird, und die Zuordnungsbeziehung eine Zuordnungsbeziehung zwischen Aggregationsstufen der zumindest zwei in Frage kommenden PDCCHs mit niedrigeren Aggregationsstufen aufweist.

11. Eine Basisstation, aufweisend:
ein Verarbeitungsmodul (601), das so konfiguriert ist, dass es dieselbe Downlink-Steuerungsinformation, DCI, auf N physikalischen Downlink-Steuerungskanälen, PDCCH, für die kooperative DCI-Übertragung überträgt, wobei zumindest einer der N in Frage kommenden PDCCHs zumindest zwei Zuständen eines Übertragungskonfigurationsindikators, TCI, entspricht, wobei N eine ganze Zahl größer oder gleich 1 ist;
ein Sendemodul (602), das so konfiguriert ist, dass es dieselbe DCI über einen PDCCH unter den N für die kooperative DCI-Übertragung in Frage kommenden PDCCHs sendet;
**dadurch gekennzeichnet, dass**:
die DCI, die über zumindest einen der N in Frage kommenden PDCCHs gesendet wird, kooperative Übertragungsressourcen-Anzeigeinformation zum Anzeigen einer Zuordnungsbeziehung zwischen Übertragungsressourcen für die kooperative DCI-Übertragung aufweist, und die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist;
oder
das Sendemodul ferner so konfiguriert ist, dass es Anzeigedaten einer Zuordnungsbeziehung zwischen Übertragungsressourcen für die kooperative DCI-Übertragung über eine Signalisierung auf höheren Schichten an ein Endgerät sendet; wobei die Zuordnungsbeziehung zwischen Übertragungsressourcen eine Zuordnungsbeziehung zwischen in Frage kommenden PDCCHs für die kooperative DCI-Übertragung oder eine Zuordnungsbeziehung zwischen zumindest einer Art von zugehörigen Daten von in Frage kommenden PDCCHs für die kooperative DCI-Übertragung aufweist;
oder
eine Zuordnungsbeziehung zwischen Übertragungsressourcen für die kooperative DCI-Übertragung zwischen der Basisstation und einem Endgerät vorab vereinbart wird, wobei die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist.

12. Die Basisstation nach Anspruch 11, wobei zumindest einer der zumindest zwei TCI-Zustände, die dem zumindest einen in Frage kommenden PDCCH entsprechen, mit einem Steuerungsressourcensatz, CORESET, assoziiert ist; oder
zumindest einer der zumindest zwei TCI-Zustände, die dem zumindest einen in Frage kommenden PDCCH entsprechen, mit einer CORESET-Teilmenge in einem CORESET assoziiert ist, wobei der CORESET zumindest eine CORESET-Teilmenge aufweist, jede der zumindest einen CORESET-Teilmenge mit einem entsprechenden TCI-Zustand konfiguriert ist und die zumindest eine CORESET-Teilmenge einer oder allen Ressourcen entspricht, die dem CORESET entsprechen.

13. Die Basisstation nach Anspruch 11, wobei der in Frage kommende PDCCH, der zumindest zwei TCI-Zuständen entspricht, durch Aggregation von zumindest zwei in Frage kommenden PDCCHs mit niedrigeren Aggregationsstufen gebildet wird.

14. Ein Terminal, aufweisend:
ein Empfangsmodul (701), das so konfiguriert ist, dass es physikalische Downlink-Steuerkanäle, PDCCHs, unter N für kooperative Downlink-Steuerinformation-, DCI-, Übertragung in Frage kommenden PDCCHs erkennt, wobei die N in Frage kommenden PDCCHs verwendet werden, um dieselbe DCI zu übertragen, wobei zumindest einer der N in Frage kommenden PDCCHs zumindest zwei Zuständen eines Übertragungskonfigurationsindikators, TCI, entspricht, wobei N eine ganze Zahl größer oder gleich 1 ist;
ein Verarbeitungsmodul (702), das so konfiguriert ist, dass es die von den unter den in Frage kommenden PDCCHs erkannten PDCCHs gesendete DCI zusammenführt;
**dadurch gekennzeichnet, dass**:
die DCI, die über zumindest einen der N in Frage kommenden PDCCHs gesendet wird, kooperative Übertragungsressourcen-Anzeigeinformation zum Anzeigen einer Zuordnungsbeziehung zwischen Übertragungsressourcen für die kooperative DCI-Übertragung aufweist, und die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist;
oder
das Empfangsmodul ferner so konfiguriert ist, dass es Anzeigedaten einer Zuordnungsbeziehung zwischen Übertragungsressourcen für die kooperative DCI-Übertragung empfängt, die von einer Basisstation über eine Signalisierung auf höheren Schichten gesendet werden; wobei die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist;
oder
eine Zuordnungsbeziehung zwischen Übertragungsressourcen für die kooperative DCI-Übertragung zwischen dem Endgerät und einer Basisstation vorab vereinbart wird, wobei die Zuordnungsbeziehung zwischen Übertragungsressourcen eine Zuordnungsbeziehung zwischen für die kooperative DCI-Übertragung in Frage kommenden PDCCHs oder eine Zuordnungsbeziehung zwischen zumindest einer Art von zugehöriger Information von für die kooperative DCI-Übertragung in Frage kommenden PDCCHs aufweist.

## Revendications

1. Un procédé de communication d'informations de contrôle, comportant de :
amener à transporter (S101), par une station de base, des informations de contrôle de liaison descendante, DCI, identiques sur N candidats à des canaux physiques de contrôle de liaison descendante, PDCCH, pour une transmission coopérative de DCI, dans lequel au moins un des N candidats PDCCH correspond à au moins deux états d'indicateur de configuration de transmission, TCI, et N est un entier supérieur ou égal à 1 ;
envoyer (S102), par la station de base, les DCI identiques via un PDCCH parmi les N candidats PDCCH pour une transmission coopérative de DCI ;
**caractérisé en ce que** :
les DCI envoyées via au moins un des N candidats PDCCH comportent des informations d'indication de ressources de transmission coopérative destinées à indiquer une relation d'association entre des ressources de transmission pour une transmission coopérative de DCI, et la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
le procédé comporte en outre de : envoyer, par la station de base, des informations d'indication d'une relation d'association entre des ressources de transmission pour une transmission coopérative de DCI à un terminal via une signalisation de couches supérieures ; dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
dans lequel une relation d'association entre des ressources de transmission pour une transmission coopérative de DCI est convenue au préalable entre la station de base et un terminal, dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI.

2. Le procédé selon la revendication 1, dans lequel au moins un des au moins deux états TCI correspondant au au moins un candidat PDCCH est associé à un ensemble de ressources de contrôle, CORESET ; ou
au moins un des au moins deux états TCI correspondant au au moins un candidat PDCCH est associé à un sous-ensemble de CORESET dans un CORESET, dans lequel le CORESET comporte au moins un sous-ensemble de CORESET, chaque sous-ensemble des au moins un sous-ensemble de CORESET est configuré avec un état TCI correspondant, et le au moins un sous-ensemble de CORESET correspond à tout ou partie d'une ressource correspondant au CORESET.

3. Le procédé selon la revendication 1, dans lequel le candidat PDCCH correspondant à au moins deux états TCI est formé par agrégation d'au moins deux candidats PDCCH ayant des niveaux d'agrégation inférieurs.

4. Le procédé selon la revendication 3, dans lequel au moins deux des au moins deux candidats PDCCH ayant des niveaux inférieurs proviennent d'au moins deux CORESET ; ou
les au moins deux candidats PDCCH ayant des niveaux inférieurs proviennent d'au moins deux sous-ensembles de CORESET, et les au moins deux sous-ensembles de CORESET appartiennent à un CORESET identique ou à au moins deux CORESET et sont respectivement configurés avec des états TCI correspondants, dans lequel chaque sous-ensemble des au moins deux sous-ensembles de CORESET correspond à une partie d'une ressource correspondant à un CORESET auquel appartient chacun des au moins deux sous-ensembles de CORESET ; ou
au moins un des au moins deux candidats PDCCH ayant des niveaux inférieurs provient d'au moins un CORESET, et au moins un autre des au moins deux candidats PDCCH ayant des niveaux inférieurs provient d'au moins un sous-ensemble de CORESET qui correspond à une partie d'une ressource correspondant à un CORESET auquel appartient le au moins un sous-ensemble de CORESET.

5. Le procédé selon la revendication 3, dans lequel un espace de recherche auquel appartient le candidat PDCCH formé par agrégation des au moins deux candidats PDCCH ayant des niveaux d'agrégation inférieurs, est formé par agrégation d'au moins deux espaces de recherche.

6. Le procédé selon la revendication 5, dans lequel au moins deux des au moins deux espaces de recherche proviennent d'au moins deux CORESET ; ou
les au moins deux espaces de recherche proviennent d'au moins deux sous-ensembles de CORESET, et les au moins deux sous-ensembles de CORESET appartiennent à un CORESET identique ou à au moins deux CORESET et sont respectivement configurés avec des états TCI correspondants, dans lequel chaque sous-ensemble des au moins deux sous-ensembles de CORESET correspond à une partie d'une ressource correspondant à un CORESET auquel appartient chacun des au moins deux sous-ensembles de CORESET ; ou
au moins un des au moins deux espaces de recherche provient d'au moins un CORESET, et au moins un autre des au moins deux espaces de recherche provient d'au moins un sous-ensemble de CORESET qui correspond à une partie d'une ressource correspondant à un CORESET auquel appartient le sous-ensemble de CORESET.

7. Le procédé selon la revendication 2, 4 ou 6, dans lequel, dans le CORESET comportant des sous-ensembles de CORESET, des ressources de temps-fréquence correspondant à au moins deux sous-ensembles de CORESET satisfont à l'une des conditions suivantes :
des ressources du domaine fréquentiel correspondant à au moins deux sous-ensembles de CORESET ne se chevauchent pas ;
des ressources du domaine temporel correspondant à au moins deux sous-ensembles de CORESET ne se chevauchent pas ;
des ressources du domaine fréquentiel correspondant à au moins deux sous-ensembles de CORESET ne se chevauchent pas, et des ressources du domaine temporel correspondant à au moins deux sous-ensembles de CORESET ne se chevauchent pas.

8. Le procédé selon la revendication 1, dans lequel la relation d'association entre au moins un type d'informations liées comporte au moins un élément parmi :
une relation d'association entre des états d'indicateur de configuration de transmission de CORESET et/ou de sous-ensembles de CORESET auxquels appartiennent les N candidats PDCCH, dans lequel un sous-ensemble de CORESET est configuré avec un état TCI correspondant, et un sous-ensemble de CORESET correspond à tout ou partie d'une ressource correspondant à un CORESET auquel appartient le sous-ensemble de CORESET ;
une relation d'association entre des espaces de recherche auxquels appartiennent les N candidats PDCCH ;
une relation d'association entre des CORESET et/ou des sous-ensembles de CORESET auxquels appartiennent les N candidats PDCCH, dans lequel un sous-ensemble de CORESET est configuré avec un état TCI correspondant, et un sous-ensemble de CORESET correspond à tout ou partie d'une ressource correspondant à un CORESET auquel appartient le sous-ensemble de CORESET ;
le candidat PDCCH correspondant à au moins deux états TCI parmi les N candidats PDCCH est formé par agrégation d'au moins deux candidats PDCCH ayant des niveaux d'agrégation inférieurs, et la relation d'association comporte une relation d'association entre des niveaux d'agrégation des au moins deux candidats PDCCH ayant des niveaux d'agrégation inférieurs.

9. Un procédé de communication d'informations de contrôle, comportant de :
détecter (S201), par un terminal, des canaux physiques de contrôle de liaison descendante, PDCCH, parmi N candidats PDCCH pour une transmission coopérative d'informations de contrôle de liaison descendante, DCI, dans lequel les N candidats PDCCH sont utilisés pour transporter des DCI identiques, au moins un des N candidats PDCCH correspond à au moins deux états d'indicateur de configuration de transmission, TCI, et N est un entier supérieur ou égal à 1 ;
fusionner (S202), par le terminal, des DCI envoyées par les PDCCH détectés parmi les candidats PDCCH ;
**caractérisé en ce que** :
les DCI envoyées via au moins un des N candidats PDCCH comportent des informations d'indication de ressources de transmission coopérative destinées à indiquer une relation d'association entre des ressources de transmission pour une transmission coopérative de DCI, et la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
le procédé comporte en outre de :
recevoir, par le terminal, des informations d'indication d'une relation d'association entre des ressources de transmission pour une transmission coopérative de DCI envoyées par une station de base via une signalisation de couches supérieures ; dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
dans lequel une relation d'association entre des ressources de transmission pour une transmission coopérative de DCI est convenue au préalable entre le terminal et une station de base, dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI.

10. Le procédé selon la revendication 9,
dans lequel la relation d'association entre au moins un type d'informations liées comporte au moins un élément parmi :
une relation d'association entre des états d'indicateur de configuration de transmission de CORESET et/ou de sous-ensembles de CORESET auxquels appartiennent les N candidats PDCCH, dans lequel un sous-ensemble de CORESET est configuré avec un état TCI correspondant, et un sous-ensemble de CORESET correspond à tout ou partie d'une ressource correspondant à un CORESET auquel appartient le sous-ensemble de CORESET ;
une relation d'association entre des espaces de recherche auxquels appartiennent les N candidats PDCCH ;
une relation d'association entre des CORESET et/ou des sous-ensembles de CORESET auxquels appartiennent les N candidats PDCCH, dans lequel un sous-ensemble de CORESET est configuré avec un état TCI correspondant, et un sous-ensemble de CORESET correspond à tout ou partie d'une ressource correspondant à un CORESET auquel appartient le sous-ensemble de CORESET ;
le candidat PDCCH correspondant à au moins deux états TCI parmi les N candidats PDCCH est formé par agrégation d'au moins deux candidats PDCCH ayant des niveaux d'agrégation inférieurs, et la relation d'association comporte une relation d'association entre des niveaux d'agrégation des au moins deux candidats PDCCH ayant des niveaux d'agrégation inférieurs.

11. Une station de base, comportant :
un module de traitement (601) configuré pour amener à transporter des informations de contrôle de liaison descendante, DCI, identiques sur N candidats à des canaux physiques de contrôle de liaison descendante, PDCCH, pour une transmission coopérative de DCI, dans lequel au moins un des N candidats PDCCH correspond à au moins deux états d'indicateur de configuration de transmission, TCI, et N est un entier supérieur ou égal à 1 ;
un module d'envoi (602) configuré pour envoyer les DCI identiques via un PDCCH parmi les N candidats PDCCH pour une transmission coopérative de DCI ;
**caractérisée en ce que** :
les DCI envoyées via au moins un des N candidats PDCCH comportent des informations d'indication de ressources de transmission coopérative destinées à indiquer une relation d'association entre des ressources de transmission pour une transmission coopérative de DCI, et la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
le module d'envoi est en outre configuré pour envoyer des informations d'indication d'une relation d'association entre des ressources de transmission pour une transmission coopérative de DCI à un terminal via une signalisation de couches supérieures ; dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
une relation d'association entre des ressources de transmission pour une transmission coopérative de DCI est convenue au préalable entre la station de base et un terminal, dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI.

12. La station de base selon la revendication 11, dans laquelle au moins un des au moins deux états TCI correspondant au au moins un candidat PDCCH est associé à un ensemble de ressources de contrôle, CORESET ; ou
au moins un des au moins deux états TCI correspondant au au moins un candidat PDCCH est associé à un sous-ensemble de CORESET dans un CORESET, dans laquelle le CORESET comporte au moins un sous-ensemble de CORESET, chaque sous-ensemble des au moins un sous-ensemble de CORESET est configuré avec un état TCI correspondant, et le au moins un sous-ensemble de CORESET correspond à tout ou partie d'une ressource correspondant au CORESET.

13. La station de base selon la revendication 11, dans laquelle le candidat PDCCH correspondant à au moins deux états TCI est formé par agrégation d'au moins deux candidats PDCCH ayant des niveaux d'agrégation inférieurs.

14. Un terminal, comportant :
un module de réception (701) configuré pour détecter des canaux physiques de contrôle de liaison descendante, PDCCH, parmi N candidats PDCCH pour une transmission coopérative d'informations de contrôle de liaison descendante, DCI, dans lequel les N candidats PDCCH sont utilisés pour transporter des DCI identiques, au moins un des N candidats PDCCH correspond à au moins deux états d'indicateur de configuration de transmission, TCI, et N est un entier supérieur ou égal à 1 ;
un module de traitement (702) configuré pour fusionner des DCI envoyées par les PDCCH détectés parmi les candidats PDCCH ;
**caractérisé en ce que** :
les DCI envoyées via au moins un des N candidats PDCCH comportent des informations d'indication de ressources de transmission coopérative destinées à indiquer une relation d'association entre des ressources de transmission pour une transmission coopérative de DCI, et la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
le module de réception est en outre configuré pour recevoir des informations d'indication d'une relation d'association entre des ressources de transmission pour une transmission coopérative de DCI envoyées par une station de base via une signalisation de couches supérieures ; dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI ;
ou
une relation d'association entre des ressources de transmission pour une transmission coopérative de DCI est convenue au préalable entre le terminal et une station de base, dans lequel la relation d'association entre des ressources de transmission comporte une relation d'association entre des candidats PDCCH pour une transmission coopérative de DCI ou une relation d'association entre au moins un type d'informations liées de candidats PDCCH pour une transmission coopérative de DCI.
